# EUROPEAN PATENT APPLICATION

(11) **EP 4 672 176 A1**
(43) Date of publication of application: **31.12.2025**
(21) Application number: 23924112.8
(22) Date of filing: 24.02.2023
(51) Int. Cl.: G06V 20/40, G06T 7/20, G06V 10/422, G06V 10/82, G06V 10/94

(54) **INFORMATION PROCESSING DEVICE PROGRAM AND INFORMATION PROCESSING DEVICE**

(71) Applicant: FUJITSU LIMITED, Kawasaki-shi, Kanagawa 211-8588 (JP)
(72) Inventor: IKAI, Yoshiaki, Kawasaki-shi, Kanagawa 211-8588 (JP)
(74) Representative: Hoffmann Eitle
(86) International application number: PCT/JP2023/006868
(87) International publication number: WO 2024/176465

(57) **Abstract**

An information processing device (100), among multiple types (110) that classify features related to behaviors of a person, receives specification of a combination (120) of types (110) belonging to each of one or more aspects defining a specific behavior. The information processing device (100), among multiple features calculable based on a first video (101) and related to a behavior of a first person captured in the first video, obtains a feature (121) for each type (110) in the specified combination (120). The information processing device (100), based on the obtained features, trains a model (130) having a function of recognizing a specific behavior of a person captured in a video.

## Description

### TECHNICAL FIELD

The present invention relates to an information processing program, and an information processing device.

### BACKGROUND ART

Conventionally, there is a technology that recognizes a behavior of a person captured in a video by analyzing the video. For example, a behavior of a person captured in a video is recognized based on the positions of the person's joints in each frame of the video, the joint positions are detected using a machine learning model by referring to a rule representing a pattern of joint positions of a person, as a condition for recognizing a specific behavior.

As a prior art, for example, there is a technique in which time series skeletal information extracted from an input video is input to a trained model to thereby calculate a feature vector. Further, for example, there is a technique for learning parameters of a behavior recognition model based on motion data including each motion of a motion object and a loss calculated using a hierarchical structure of behavior labels. Further, for example, there is technique for recognizing three-dimensional (3D) motion using linear discriminant analysis. Further, for example, there is technique for training parameters of a hierarchical model which represents human activity at multiple levels of detail.

Patent Document 1: Japanese Laid-Open Patent Publication No.2022-117766
Patent Document 2: Japanese Laid-Open Patent Publication No. 2022-072444
Patent Document 3: U.S. Patent Application Publication No. 2014-0143183
Patent Document 4: U.S. Patent Application Publication No. 2008-0285807

### DISCLOSURE OF INVENTION

### PROBLEM TO BE SOLVED BY THE INVENTION

However, with the conventional techniques, in some cases, it is difficult to recognize a specific behavior of a person captured in a video. For example, in an instance in which a specific behavior is complicated, a rule representing a suitable pattern of joint positions of a person cannot be set as a condition for recognizing the specific behavior and the specific behavior of the person captured in the video cannot be recognized.

In one aspect, an object is to easily recognize a specific behavior.

### MEANS FOR SOLVING PROBLEM

According to one aspect of an embodiment, an information processing program and an information processing device for receiving specification of a combination of one or more types defining a specific behavior, among a plurality of types each classifying a feature related to a behavior of a person; obtaining, among a plurality of features related to a behavior of a first person captured in a first video, a feature of each type in the specified combination; and training a model that recognizes the specific behavior of the person captured in a video, the model being trained based on each obtained feature, are proposed.

### EFFECT OF THE INVENTION

According to one aspect, it becomes possible to easily recognize a specific behavior.

### BRIEF DESCRIPTION OF DRAWINGS

Fig. 1 is a diagram depicting an example of an information processing method according to an embodiment.
Fig. 2 is a diagram depicting an example of a behavior recognition system 200.
Fig. 3 is a block diagram depicting an example of hardware configuration of an information processing device 100.
Fig. 4 is a block diagram depicting an example of a hardware configuration of a storage device 201.
Fig. 5 is a block diagram depicting an example of a hardware configuration of a user terminal 202.
Fig. 6 is a block diagram depicting an example of a hardware configuration of video equipment 203.
Fig. 7 is a block diagram depicting an example of a functional configuration of the information processing device 100.
Fig. 8 is a diagram depicting an example of features belonging to a first aspect.
Fig. 9 is a diagram depicting an example of features belonging to the first aspect.
Fig. 10 is a diagram depicting an example of features belonging to the first aspect.
Fig. 11 is a diagram depicting an example of features belonging to the first aspect.
Fig. 12 is diagram depicting an example of features belonging to a second aspect.
Fig. 13 is a diagram depicting an example of features belonging to a third aspect.
Fig. 14 is a diagram depicting an example of features belonging to a fourth aspect.
Fig. 15 is a diagram depicting an example receiving selection of a type of feature.
Fig. 16 is a diagram depicting an example receiving selection of a type of feature.
Fig. 17 is a diagram depicting an example of a relationship between a specific behavior and a selected feature.
Fig. 18 is a diagram depicting an example of a relationship between a specific behavior and a selected feature.
Fig. 19 is a diagram depicting an example of training of a behavior recognition model 1940.
Fig. 20 is a diagram depicting an example of use of the behavior recognition model 1940.
Fig. 21 is a flowchart depicting an example of a procedure of a process performed during training.
Fig. 22 is a flowchart depicting an example of a procedure of a process performed during inferencing.
Fig. 23 is a sequence diagram depicting an example of a procedure of overall processing executed during training.
Fig. 24 is a sequence diagram depicting an example of a procedure of the overall processing performed during inferencing.

### BEST MODE (S) FOR CARRYING OUT THE INVENTION

Embodiments of an information processing program, and an information processing device according to the present invention are described in detail herein with reference to the accompanying drawings.

### (Example of information processing method according to embodiment)

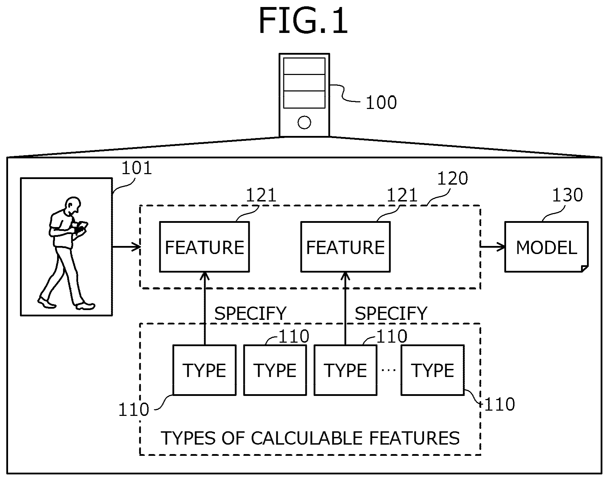

Fig. 1 is a diagram depicting an example of an information processing method according to an embodiment. An information processing device 100 is a computer for easily training a model for recognizing a behavior of a person captured in a video. The information processing device 100 is, for example, a server, a personal computer (PC), etc.

Conventionally, it is desirable to recognize a behavior of a person captured in a video by analyzing the video. For example, a first technique is conceivable in which a behavior recognition model that receives direct input of a video and has a function of recognizing, in response to the input video, a behavior of a person captured in the video, is trained and used to recognize behaviors of persons captured in a video.

With the first technique, in some instances, it may be difficult to recognize a specific behavior of a person captured in a video. For example, to improve the accuracy in which the behavior recognition model recognizes a specific behavior, preparation of a large amount of video as samples tends to be necessary. Therefore, for example, training a behavior recognition model for accurate recognition of a specific behavior may be difficult and recognizing a specific behavior of a person captured in a video may be difficult.

Further, a second technique is conceivable in which, for example, a rule representing a pattern of a person's joint positions is referred to as a condition for recognizing a specific behavior and based on a person's joint positions detected in each frame of a video using a machine learning model, a behavior of the person in the video is recognized.

With the second technique, in some instances, it may be difficult to recognize a specific behavior of a person captured in a video. For example, in an instance in which a specific behavior is complicated, a rule representing a suitable pattern of joint positions of a person cannot be set as a condition for recognizing the specific behavior and the specific behavior of the person captured in the video cannot be recognized.

More specifically, an instance is conceivable in which a specific behavior is "smartphone use while walking" which is when a person is looking at and manipulating the screen of a smartphone while walking. **In** this instance, it is conceivable that rules indicating combinations of a pattern of a person's joint positions indicating "continued walking", a pattern of a person's joint positions indicating "a hand being kept out in front", and a pattern of a person's joint positions indicating "the face facing downward" are prepared. Further, when the prepared rules are referred to in order to recognize a behavior of a person captured in a video, it is conceivable that a behavior of walking while holding a cup of coffee may be erroneously recognized as "smartphone use while walking".

Further, for example, a third technique is conceivable in which a person's joint positions detected in each frame of a video using a machine learning model are employed as explanatory variables to train a behavior recognition model to recognize a behavior of a person captured in a video. **In** the third technique, based on a person's joint positions detected in each frame of a video using the machine learning model, the trained behavior recognition model is used to recognize a behavior of a person captured in a video.

With the third technique, in some instances, it may be difficult to recognize a specific behavior of a person captured in a video. For example, to improve the accuracy in which the behavior recognition model recognizes a specific behavior, preparation of a large amount of video as samples tends to be necessary. More specifically, as a sample, videos of positive examples in which a specific behavior is captured and videos of negative examples in which the specific behavior is not captured have to be prepared. Accordingly, for example, training the behavior recognition model for accurate recognition of a specific behavior may be difficult and recognizing a specific behavior of a person captured in a video may be difficult.

Thus, in the present embodiment, an information processing method capable of easily recognizing a specific behavior is described.

In Fig. 1, the information processing device 100 receives specification of a combination 120 of types 110 belonging to each of one or more aspects defining a specific behavior, the combination 120 of types 110 being among multiple types 110 classifying features related to behaviors of a person. The features, for example, may be calculated based on a video in which a person is captured.

An aspect, for example, is a spatial first aspect, a temporal second aspect, a third aspect concerning a relationship between a person and another object or a location, or a fourth aspect concerning interaction between features, etc. A feature is a feature belonging to the first aspect, a feature belonging to the second aspect, a feature belonging to the third aspect, or a feature belonging to the fourth aspect, etc.

A feature belonging to the first aspect, for example, may be calculated based on coordinates for each of one or more parts of a person captured in a video, the coordinates being calculated by analysis of the video. A part, for example, is the head, the left shoulder, the left elbow, the left hand, the right shoulder, the right elbow, the right hand, the low back, the left knee, the left ankle, the right knee, or the right ankle, etc. A feature belonging to the first aspect, more specifically, is the coordinates of each of the one or more parts of a person. A feature belonging to the first aspect, more specifically, is an orientation of each of the one or more parts of a person. A feature belonging to the first aspect, more specifically, is an angle between two parts of a person.

A feature belonging to the second aspect, for example, may be calculated based on the coordinates of each of the one or more parts of a person captured in a video, the coordinates being calculated by analysis of the video. A feature belonging to the second aspect, more specifically, is a value obtained by analysis of a feature belonging to the first aspect in a time direction. A feature belonging to the second aspect, more specifically, is a statistical value of a feature belonging to the first aspect, in a specific time window. The statistical value, for example, is a maximum value, a minimum value, an average value, a mode, or a median value, etc.

A feature belonging to the third aspect, for example, may be calculated based on the coordinates of each of the one or more parts of a person captured in a video and a location or object (other than the person) that is captured in the video and detected by analysis of the video, etc. Another object, for example, is a living or non-living thing. Another object, more specifically, is an object in the possession of the person. Another object, for example, includes other people. A feature belonging to the third aspect, more specifically, is a feature representing a relationship between a person and a location. A feature belonging to the third aspect, more specifically, is a feature representing a relationship between a person and another object.

A feature belonging to the fourth aspect, for example, may be calculated based on two or more features calculated by analysis of the video. A feature belonging to the fourth aspect, more specifically, is a difference of two features or a sum of two features. A feature belonging to the fourth aspect, more specifically, is a principal component of three or more features or a singular value of three or more features.
(1-1) The information processing device 100 obtains, from among multiple features that may be calculated based on a first video 101 and are related to a behavior of a first person captured in a first video 101, features 121 of the types 110 in the combination 120 specified. The information processing device 100, for example, analyzes the first video 101, calculates the features 121 of the types 110 in the combination 120 specified, and thereby obtains the features 121.
(1-2) The information processing device 100 trains a model 130, based on the obtained features. The model 130, for example, is a machine learning model. The model 130 has a function of recognizing a specific behavior of a person captured in a video. The information processing device 100, for example, trains the model 130, using random forest. As a result, the information processing device 100 may enable use of the model 130 that recognizes a specific behavior of a person captured in a video and may easily recognize a specific behavior.

For example, conventionally, in training a model for recognizing a specific behavior, multiple calculable features are employed as explanatory variables and in a process of training the model, of the multiple features, which feature is suitable for the purpose of recognizing a specific behavior may have to be determined. Thus, for example, conventionally, to determine which of the multiple features is suitable for the purpose of recognizing a specific behavior, preparation of a large amount of video including positive and negative examples as samples tends to be necessary. Therefore, conventionally, for example, a problem arises in that the workload and work time for a worker to prepare the samples increases.

In contrast, the information processing device 100, for example, among the multiple calculable features, a portion of the features suitable for the purpose of recognizing a specific behavior may be selectively employed as explanatory variables. Thus, the information processing device 100, for example, may easily reduce the amount of video to be prepared as samples and may reduce the workload and work time of a worker who prepares the samples. The information processing device 100, for example, may reduce the amount of video to be prepared as samples and thus, may reduce the processing load and processing time for training the model 130. As described, the information processing device 100 may easily train the model 130 that accurately recognizes a specific behavior of a person captured in a video and thus, may easily recognize a specific behavior.

For example, conventionally, a specific behavior of a person captured in a video is recognized by referring to rules as conditions for recognizing the specific behavior, the rules indicating patterns of coordinates of each of one or more parts of a person. Thus, for example, conventionally, a problem arises in that it is difficult to set rules unless the worker who sets the rules knows in detail the characteristics that appear in a specific behavior of a person. Further, for example, conventionally, a problem arises in that the workload and work time of the worker who sets the rules increases.

In contrast, the information processing device 100, for example, makes it possible for the worker to merely specify some of the types of features suitable for the purpose of recognizing a specific behavior, among the multiple types classifying calculable features. The information processing device 100 makes it possible for the worker to not have to explicitly specify a pattern of coordinates for each of one or more parts of a person. Thus, the information processing device 100, for example, may reduce the workload and work time of the worker.

Herein, while an instance is described in which the information processing device 100 analyzes the first video 101 and calculates only the features of the types 110 in the combination 120 specified, configuration is not limited hereto. For example, the information processing device 100 may analyze the first video 101 and calculate multiple features related to a behavior of the first person captured in the first video 101. In this instance, the information processing device 100 extracts, from the multiple calculated features, the features of the types 110 in the specified combination 120 and thereby obtains the features.

Herein, while an instance in which the information processing device 100 operates independently, configuration is not limited hereto. For example, the information processing device 100 may collaborate with another computer. More specifically, the information processing device 100 may collaborate with another computer that has a function of training a model and may transmit obtained features to the other computer to thereby train the model. For example, multiple computers may collaborate and thereby implement a function of the information processing device 100. More specifically, a function of the information processing device 100 may be implemented by a cloud.

### (Example of behavior recognition system 200)

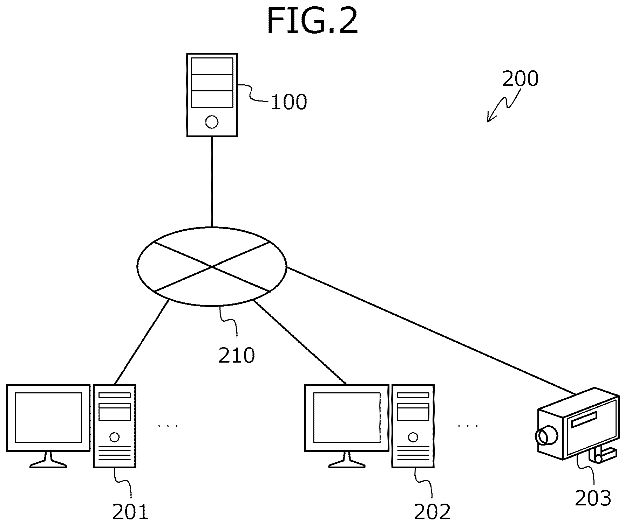

Next, with reference to Fig. 2, an example of the behavior recognition system 200 to which the information processing device 100 depicted in Fig. 1 is applied is described.

Fig. 2 is a diagram depicting an example of the behavior recognition system 200. In Fig. 2, the behavior recognition system 200 includes the information processing device 100, a storage device 201, a user terminal 202, and video equipment 203.

In the behavior recognition system 200, the information processing device 100 and the storage device 201 are coupled to each other through a wired or wireless network 210. The network 210, for example, is a local area network (LAN), a wide area network (WAN), the Internet, etc.

Further, in the behavior recognition system 200, the information processing device 100 and the user terminal 202 are coupled to each other through the network 210, which may be wired or wireless. In the behavior recognition system 200, the information processing device 100 and the video equipment 203 are coupled to each other through the network 210, which may be wired or wireless.

The information processing device 100 is a computer for training a behavior recognition model that recognizes specific behaviors of a person captured in a video. The information processing device 100 stores multiple types that classify features related to behaviors of a person. Of the multiple types, the information processing device 100 receives specification of a combination of types belonging to each of one or more aspects that define a specific behavior.

The information processing device 100, for example, receives from the user terminal 202, a combination of types belonging to each of one or more aspects that define a specific behavior and thereby receives specification of the combination. The information processing device 100 may associate the specified combination with the specific behavior, and store both to the storage device 201. The information processing device 100, for example, associates and transmits the specified combination and the specific behavior to the storage device 201.

The information processing device 100 obtains a training video used as a sample when the behavior recognition model that recognizes specific behaviors of a person captured in a video is trained. The information processing device 100, for example, in response to communication with the user terminal 202, obtains from the storage device 201, a training video stored in the storage device 201. The information processing device 100, more specifically, receives specification of a training video from the user terminal 202 and obtains the specified training video from the storage device 201. The information processing device 100, for example, according to communication with the user terminal 202, may obtain a correct answer label corresponding to the training video, from the storage device 201.

The information processing device 100 obtains an evaluation-use video that is used as a sample when the trained behavior recognition model is evaluated. The information processing device 100, for example, according to communication with the user terminal 202, obtains from the storage device 201, an evaluation-use video stored by the storage device 201. The information processing device 100, more specifically, receives specification of an evaluation-use video from the user terminal 202 and obtains the specified evaluation-use video from the storage device 201. The information processing device 100, for example, according to communication with the user terminal 202, may obtain a correct answer label corresponding to the evaluation-use video from the storage device 201.

The information processing device 100, among the multiple features calculable based on the training video and related to a behavior of the first person captured in the training video, calculates features of the types in the specified combination. The information processing device 100 trains the behavior recognition model, based on the calculated features. The information processing device 100, for example, trains the behavior recognition model based on the calculated features and the correct answer label corresponding to the training video. The information processing device 100 may associate the trained behavior recognition model with the specific behavior and store both to the storage device 201. The information processing device 100, for example, associates and transmits the trained behavior recognition model and the specific behavior to the storage device 201.

The information processing device 100 may evaluate the trained behavior recognition model. The information processing device 100, among the multiple features calculable based on the evaluation-use video and related to a behavior of the first person captured in the evaluation-use video, calculates features of the types in the specified combination. The information processing device 100 evaluates the trained behavior recognition model, based on the calculated features. The information processing device 100, for example, evaluates the trained behavior recognition model, based on the calculated features and the correct answer label corresponding to the evaluation-use video.

The information processing device 100 receives an inference-use video from the video equipment 203. The information processing device 100, among multiple features calculable based on the inference-use video and related to a behavior of a second person captured in the inference-use video, calculates the features of the types in the specified combination. The second person, for example, may be the same person as the first person. The information processing device 100 inputs the calculated features to the behavior recognition model and thereby recognizes a specific behavior of a person captured in the inference-use video. The information processing device 100, for example, inputs the calculated features to the behavior recognition model and thereby determines whether a behavior of the person captured in the inference-use video is a specific behavior.

The information processing device 100 transmits a result of determining whether a behavior of a person captured in the inference-use video is a specific behavior to the user terminal 202. The information processing device 100, for example, is a server, a PC, etc.

The storage device 201 is a computer that stores various types of information referred to or updated by the information processing device 100. The storage device 201, for example, receives a specific behavior and a specified combination from the information processing device 100. The storage device 201, for example, correlates and stores the specified combination and the specific behavior with each other.

The storage device 201, for example, stores training video used as a sample when the behavior recognition model that recognizes specific behaviors of a person captured in a video is trained. The storage device 201, for example, may store a correct answer label corresponding to a training video. The storage device 201, for example, stores evaluation-use video used as a sample when the behavior recognition model is evaluated. The storage device 201, for example, may store a correct answer label corresponding to an evaluation-use video.

The storage device 201, for example, receives the behavior recognition model and a specific behavior from the information processing device 100. The storage device 201, for example, associates and stores the behavior recognition model and the specific behavior with each other. The storage device 201, for example, is a server or the like.

The user terminal 202 is a computer used by a worker who utilizes the behavior recognition model that recognizes specific behaviors of a person captured in a video. The user terminal 202, for example, based on an operation input by the user, receives specification of a combination of types belonging to each of one or more aspects that define a specific behavior, the types being among multiple types that classify features related to behaviors of a person. The user terminal 202 transmits the specified combination to the information processing device 100.

The user terminal 202, for example, based on an operation input by the user, receives specification of a training video to be used as a sample when the behavior recognition model that recognizes specific behaviors of a person captured in a video is trained and transmits the specification of the training video to the information processing device 100. The user terminal 202, for example, based on an operation input by the user, may obtain specification of a correct answer label corresponding to the training video and may transmit the specification of the correct answer label to the information processing device 100.

The user terminal 202, for example, based on an operation input by the user, receives specification of an evaluation-use video used as a sample when the behavior recognition model is evaluated and transmits the specification of the evaluation-use video to the information processing device 100. The user terminal 202, for example, based on an operation input by the user, may receive a specification of the correct answer label corresponding to the evaluation-use video and may transmit the specification of the correct answer label to the information processing device 100.

The user terminal 202 receives from the information processing device 100, a result of a determination of whether a behavior of a person captured in the inference-use video is a specific behavior. The user terminal 202 outputs the result of the determination of whether a behavior of a person captured in the inference-use video is a specific behavior, so that the user may refer to the result. The user terminal 202, for example, is a PC, a tablet-type terminal, a smartphone, etc.

The video equipment 203 is a computer that generates video. The video equipment 203 generates inference-use video by capturing a predetermined space. The video equipment 203 transmits the generated inference-use video to the information processing device 100. The video equipment 203, for example, is a tablet-type terminal, a smartphone, etc. The video equipment 203, for example, may be a surveillance camera, a fixed-point camera, etc.

Herein, while an instance is described in which the information processing device 100 is a device different from the storage device 201, configuration is not limited hereto. For example, the information processing device 100 may have a function of the storage device 201 and may operate as the storage device 201. In this instance, in the behavior recognition system 200, for example, the storage device 201 may be omitted.

Herein, while an instance is described in which the information processing device 100 is a device different from the user terminal 202, configuration is not limited hereto. For example, the information processing device 100 may have a function of the user terminal 202 and may operate as the user terminal 202. In this instance, in the behavior recognition system 200, for example, the user terminal 202 may be omitted.

Herein, while an instance is described in which the information processing device 100 is different from the video equipment 203, configuration is not limited hereto. For example, the information processing device 100 may have a function of the video equipment 203 and may operate as the video equipment 203. In this instance, in the behavior recognition system 200, for example, the video equipment 203 may be omitted.

### (Example of hardware configuration of information processing device 100)

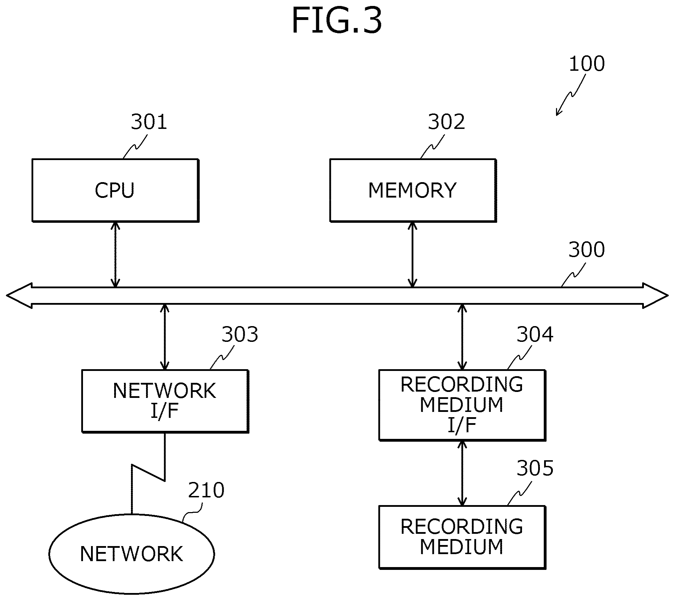

Next, with reference to Fig. 3, an example of a hardware configuration of the information processing device 100 is described.

Fig. 3 is a block diagram depicting an example of hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are coupled to each other by a bus 300.

Here, the CPU 301 governs overall control of the information processing device 100. The memory 302 includes, for example, a read-only memory (ROM), a random-access memory (RAM), a flash ROM, etc. In particular, for example, the flash ROM and the ROM store therein various programs and the RAM is used as a work area of the CPU 301. The programs stored in the memory 302 are loaded onto the CPU 301, whereby encoded processes are executed by the CPU 301.

The network I/F 303 is coupled to the network 210 through a communications line and communicates with other computers via the network 210. Further, the network I/F 303 administers an internal interface with the network 210 and controls the input and output of data from the other computers. The network I/F 303, for example, is a modem, a LAN adapter, etc.

The recording medium I/F 304, under the control of the CPU 301, controls the reading and writing of data with respect to the recording medium 305. The recording medium I/F 304 is, for example, a disk drive, a solid-state drive (SSD), a universal serial bus (USB) port, etc. The recording medium 305 is a nonvolatile memory storing therein data written thereto under the control of the recording medium I/F 304. The recording medium 305, for example, is a disk, a semiconductor memory, a USB memory, etc. The recording medium 305 may be removable from the information processing device 100.

### (Example of hardware configuration of storage device 201)

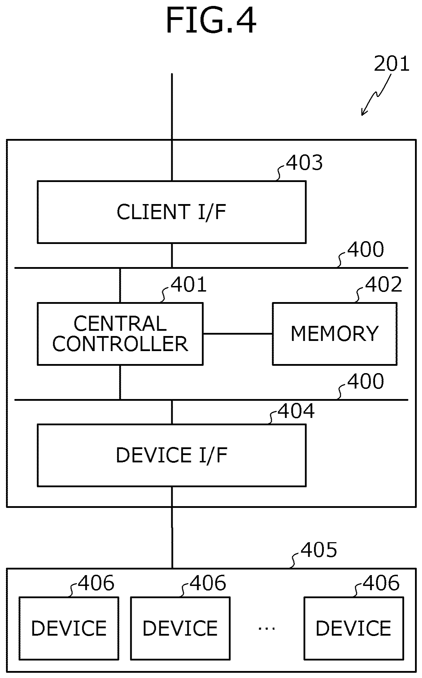

Next, with reference to Fig. 4, an example of a hardware configuration of the storage device 201 is described.

Fig. 4 is a block diagram depicting an example of a hardware configuration of the storage device 201. In Fig. 4, the storage device 201 has a central controller 401, a memory 402, a client I/F 403, a device I/F 404, and a storage apparatus 405. Further, the components are coupled to each other by a bus 400.

Here, the central controller 401 governs overall control of the storage device 201. The memory 402 includes, for example, a read-only memory (ROM), a random-access memory (RAM), a flash ROM, etc. In particular, for example, the flash ROM and the ROM store therein various programs and the RAM is used as a work area of the central controller 401. The programs stored in the memory 402 are loaded onto the central controller 401, whereby encoded processes are executed by the central controller 401.

The client I/F 403 is coupled to the network 210 through a communications line and communicates with other computers via the network 210. Another computer, for example, is the information processing device 100. The client I/F 403 administers an internal interface with the network 210 and controls the input and output of data from the other computers.

The device I/F 404, under the control of the central controller 401, controls the reading and writing of data with respect to the storage apparatus 405. The device I/F 404, for example, is a solid-state drive (SSD) port, etc. The storage apparatus 405 includes multiple devices 406 that store data written thereto, under the control of the device I/F 404. The devices 406, for example, are SSDs, etc. The storage apparatus 405 may be removable from the storage device 201.

### (Example of hardware configuration of user terminal 202)

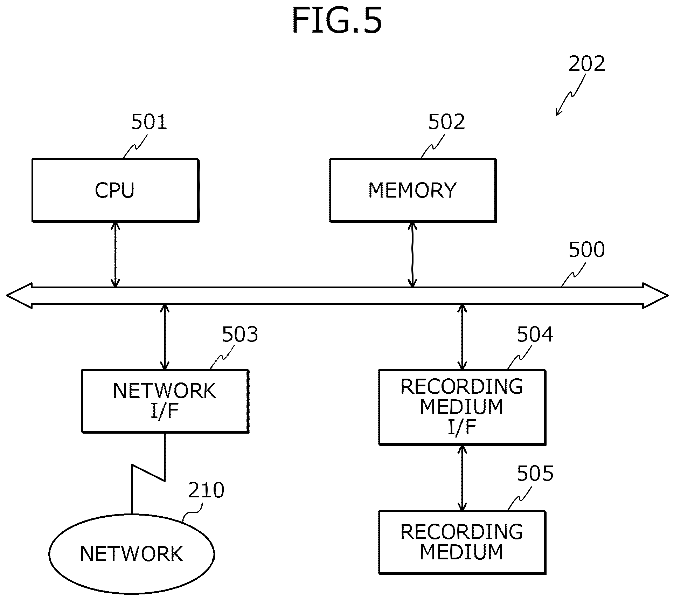

Next, with reference to Fig. 5, an example of a hardware configuration of the user terminal 202 is described.

Fig. 5 is a block diagram depicting an example of a hardware configuration of the user terminal 20. In Fig. 5, the user terminal 202 has a CPU 501, a memory 502, a network I/F 503, a recording medium I/F 504, and a recording medium 505. Further, the components are coupled to each other by a bus 500.

Here, the CPU 501 governs overall control of the user terminal 202. The memory 502, for example, includes a ROM, a RAM, and a flash ROM, etc. More specifically, for example, the flash ROM and the ROM store various types of programs and the RAM is used as a work area of the CPU 501. Programs stored in the memory 502 are loaded onto the CPU 501, whereby encoded processes are executed by the CPU 501.

The network I/F 503 is coupled to the network 210 through a communications line and communicates with other computers via the network 210. Further, the network I/F 503 administers an internal interface with the network 210 and controls the input and output of data from the other computers. The network I/F 503, for example, is a modem, a LAN adapter, etc.

The recording medium I/F 504, under the control of the CPU 501, controls the reading and writing of data with respect to the recording medium 505. The recording medium I/F 504, for example, is a disk drive, a SSD, a USB port, etc. The recording medium 505 is a nonvolatile memory storing therein data written thereto under the control of the recording medium I/F 504. The recording medium 505, for example, is a disk, a semiconductor memory, a USB memory, etc. The recording medium 505 may be removable from the user terminal 202.

Other than the components described above, the user terminal 202, for example, may have a keyboard, a mouse, a display, a printer, a scanner, a microphone, a speaker, etc. Further, the user terminal 202 may have the recording medium I/F 504 and/or the recording medium 505 in plural. Further, in the user terminal 202, the recording medium I/F 504 and the recording medium 505 may be omitted.

### (Example of hardware configuration of video equipment 203)

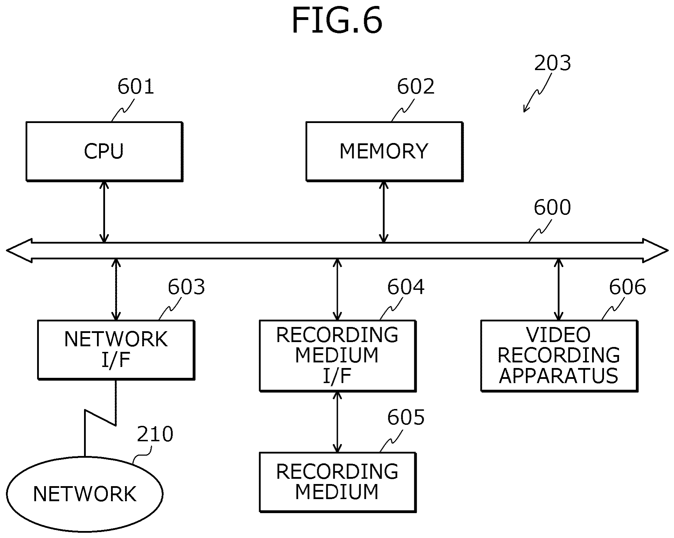

Next, with reference to Fig. 6, an example of a hardware configuration of the video equipment 203 is described.

Fig. 6 is a block diagram depicting an example of a hardware configuration of the video equipment 203. In Fig. 6, the video equipment 203 includes a CPU 601, a memory 602, a network I/F 603, a recording medium I/F 604, a recording medium 605, and a video apparatus 606. Further, the components are coupled to each other by a bus 600.

Here, the CPU 601 governs overall control of the video equipment 203. The memory 602, for example, includes a ROM, a RAM, and a flash ROM, etc. More specifically, for example, the flash ROM and the ROM store various programs and the RAM is used as a work area of the CPU 601. The programs stored in the memory 602 are loaded onto the CPU 601, whereby encoded processes are executed by the CPU 601.

The network I/F 603 is coupled to the network 210 through a communications line and communicates with other computers via the network 210. Further, the network I/F 603 administers an internal interface with the network 210 and controls the input and output of data from the other computers. The network I/F 603, for example, is a modem, a LAN adapter, etc.

The recording medium I/F 604, under the control of the CPU 601, controls the reading and writing of data with respect to the recording medium 605. The recording medium I/F 604, for example, is a disk drive, an SSD, a USB port, etc. The recording medium 605 is a nonvolatile memory storing therein data written to thereto under the control of the recording medium I/F 604. The recording medium 605, for example, is a disk, a semiconductor memory, a USB memory, etc. The recording medium 605 may be removable from the video equipment 203.

The video apparatus 606 has multiple image sensors and generates video capturing a predetermined shooting range by the image sensors. The video apparatus 606, for example, may be mobile.

Other than the components described above, the video equipment 203, for example, may have a keyboard, a mouse, a display, a printer, a scanner, a microphone, a speaker, etc. Further, the video equipment 203 may have the recording medium I/F 604 and/or the recording medium 605 in plural. Further, in the video equipment 203, the recording medium I/F 604 and/or the recording medium 605 may be omitted.

### (Example of functional configuration of information processing device 100)

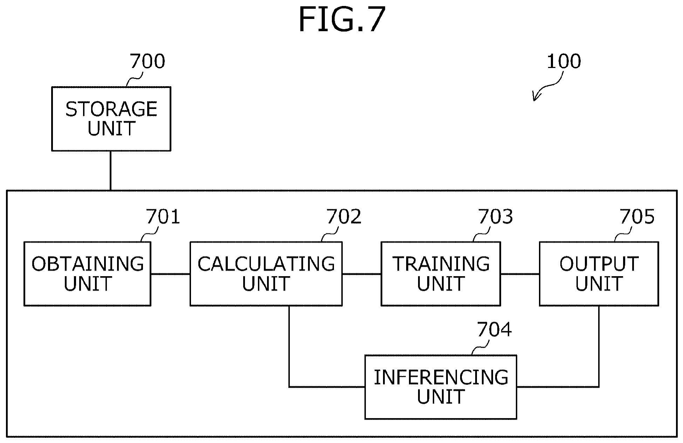

Next, with reference to Fig. 7, an example of a functional configuration of the information processing device 100 is described.

Fig. 7 is a block diagram depicting an example of a functional configuration of the information processing device 100. The information processing device 100 includes a storage unit 700, an obtaining unit 701, a calculating unit 702, a training unit 703, an inferencing unit 704, and an output unit 705.

The storage unit 700, for example, is implemented by a storage region such as the memory 302 and the recording medium 305 depicted in Fig. 3. Herein, while an instance is described in which the storage unit 700 is included in the information processing device 100, configuration is not limited hereto. For example, the storage unit 700 may be included in a device different from the information processing device 100 and stored contents of the storage unit 700 may be referred to by the information processing device 100.

The obtaining unit 701 to the output unit 705 functions as one example of a controller. More specifically, for example, functions of the obtaining unit 701 to the output unit 705 are implemented by executing, on the CPU 301, a program stored in a storage region such as the memory 302 or the recording medium 305 depicted in Fig. 3, or by the network I/F 303. Process results obtained by the components, for example, are stored to a storage region such as the memory 302 or the recording medium 305 depicted in Fig. 3.

The storage unit 700 stores various types of information that is updated or referred to during processes of the components. The storage unit 700, for example, stores video. The storage unit 700, more specifically, stores a first video. The first video, for example, is video constituting a sample used when a behavior recognition model for recognizing a behavior of a person captured in a video is trained. The behavior recognition model, for example, is a machine learning model. The first video, more specifically, is a video in which the first person is captured. There may be multiple first videos, for example. The first video, for example, is obtained by the obtaining unit 701.

The storage unit 700, more specifically, stores a second video. The second video, for example, is a video constituting input of the behavior recognition model and a video constituting an object of behavior recognition for a person. The second video, more specifically, is a video in which the second person is captured. The second person, for example, may be the same person as the first person. The second person, for example, may be a person different from the first person. There may be multiple second videos, for example. The second video, for example, is obtained by the obtaining unit 701.

The storage unit 700, for example, stores multiple types that classify features related to behaviors of a person. An aspect, for example, is the spatial first aspect, the temporal second aspect, the third aspect concerning a relationship between a person and another object or a location, or the fourth aspect concerning interaction between features.

A feature, for example, is calculable based on a video in which a person is captured. A feature is a feature belonging to the first aspect, a feature belonging to the second aspect, a feature belonging to the third aspect, or a feature belonging to the fourth aspect.

A feature belonging to the first aspect, for example, may be calculated based on coordinates for each of one or more parts of a person captured in a video, the coordinates being calculated by analysis of the video. A part, for example, is the head, the left shoulder, the left elbow, the left hand, the right shoulder, the right elbow, the right hand, the low back, the left knee, the left ankle, the right knee, or the right ankle, etc. A feature belonging to the first aspect, more specifically, is the coordinates of each of the one or more parts of a person. The coordinates of a part, for example, are coordinates on a skeleton. A feature belonging to the first aspect, more specifically, may be calculated based on skeletal information including, for each part, coordinates on a skeleton. A feature belonging to the first aspect, more specifically, is an orientation of each of the one or more parts of a person. A feature belonging to the first aspect, more specifically, is an angle between two parts of a person.

A feature belonging to the second aspect, for example, may be calculated based on the coordinates of each of the one or more parts of a person captured in a video, the coordinates being calculated by analysis of the video. A feature belonging to the second aspect, more specifically, may be calculated based on the skeletal information including, for each part, coordinates on the skeleton. A feature belonging to the second aspect, more specifically, is a value obtained by analysis of a feature belonging to the first aspect in a time direction. A feature belonging to the second aspect, more specifically, is a statistical value of a feature belonging to the first aspect, in a specific time window. The statistical value, for example, is a maximum value, minimum value, average value, mode, or median value, etc.

A feature belonging to the third aspect, for example, may be calculated based on the coordinates of each of the one or more parts of a person captured in a video and a location or an object (other than the person) that is captured in the video and detected by analysis of the video, etc. A feature belonging to the third aspect, more specifically, is a feature representing a relationship between a person and a location. A feature belonging to the third aspect, more specifically, is a feature representing a relationship between a person and another object.

A feature belonging to the fourth aspect, for example, may be calculated based on two or more features calculated by analysis of the video. A feature belonging to the fourth aspect, more specifically, is a difference of two features or sum of two features. A feature belonging to the fourth aspect, more specifically, is a principal component of three or more features or a singular value of three or more features.

The multiple types, for example, include one or more types that classify features belonging to the first aspect. The multiple types, for example, include one or more types that classify features belonging to the second aspect. The multiple types, for example, include one or more types that classify features belonging to the third aspect. The multiple types, for example, include one or more types that classify features belonging to the fourth aspect. The multiple types, for example, are set in advance by the user.

The storage unit 700, for example, among the multiple types that classify features related to behaviors of a person, associates and stores with a specific behavior, a combination of types belonging to each of one or more aspects that define the specific behavior, the combination being stored as a specified combination. The storage unit 700, for example, among the multiple types, may associate and store with the specific behavior, a combination of types belonging to each of one or more aspects that define each of multiple elements that form the specific behavior, the combination being stored as a specified combination. An element, for example, is an action forming a specific behavior. A specified combination, for example, is obtained by the obtaining unit 701. Specified combinations, for example, may be set in advance by the user.

The storage unit 700, for example, stores features related to behaviors of a person. The storage unit 700, more specifically, stores multiple features that are calculable based on a video and related to a behavior of a person captured in the video. The storage unit 700, more specifically, stores multiple features that are calculable based on the first video and related to a behavior of the first person captured in the first video. The storage unit 700, more specifically, stores multiple features that are calculable based on the second video and related to a behavior of the second person captured in the second video. The features, for example, are calculated by the calculating unit 702. The features, for example, may be obtained by the obtaining unit 701.

The storage unit 700, more specifically, among the multiple features that are calculable based on a video and related to a behavior of a person captured in the video, may store features of a specified combination. The storage unit 700, more specifically, among the multiple features calculable based on the first video and related to a behavior of the first person captured in the first video, stores the features of the specified combination. The storage unit 700, more specifically, among the multiple features calculable based on the second video and related to a behavior of the second person captured in the second video, stores the features of the specified combination. The features, for example, are calculated by the calculating unit 702. The features, for example, may be obtained by the obtaining unit 701.

The storage unit 700, for example, stores a first model that outputs the coordinates of each of the one or more parts of a person captured in an input video. The first model, for example, is expressed by a decision tree, a neural network, or a formula, etc. The first model, for example, is a deep learning (DL) model. The storage unit 700, more specifically, stores one or more parameters forming the first model. The first model, for example, is obtained by the obtaining unit 701. The first model, for example, may be generated by the training unit 703.

The storage unit 700, for example, stores first training data used when the first model is trained. The first training data, for example, is data associating a sample video and the correct coordinates of each of the one or more parts of a person captured in the video. The first training data, for example, is obtained by the obtaining unit 701.

The storage unit 700, for example, stores a second model for detecting a location or an object captured in an input video. The second model, for example, is expressed by a decision tree, a neural network, or a formula, etc. The second model, for example, is a DL model. The storage unit 700, more specifically, stores one or more parameters forming the second model. The second model, for example, is obtained by the obtaining unit 701. The second model, for example, may be generated by the training unit 703.

The storage unit 700, for example, stores second training data used when the second model is trained. The second training data, for example, is data associating a sample video and a correct result of detecting an object or a location captured in the video. The second training data, for example, is obtained by the obtaining unit 701.

The storage unit 700, for example, stores the behavior recognition model that recognizes specific behaviors of a person captured in a video. The behavior recognition model, for example, has a function of recognizing a specific behavior of a person captured in a video, in response to input of a feature of a type in a specified combination. The behavior recognition model, for example, is expressed by a decision tree, a neural network, or a formula, etc. The behavior recognition model, for example, is a DL model. The storage unit 700, more specifically, stores one or more parameters forming the behavior recognition model. The behavior recognition model, for example, is generated by the training unit 703.

The obtaining unit 701 obtains various types of information used in the processes of the functional units. The obtaining unit 701 stores the obtained various types of information to the storage unit 700 or outputs the obtained various types of information to the functional units. Further, the obtaining unit 701 may output various types of information stored in the storage unit 700 to the functional units. The obtaining unit 701, for example, obtains various types of information based on an operation input by the user. The obtaining unit 701, for example, may receive various types of information transmitted from a device different from the information processing device 100.

The obtaining unit 701, for example, obtains the first video. The obtaining unit 701, more specifically, receives input of the first video based on an operation input by the user and thereby obtains the first video. The obtaining unit 701, more specifically, obtains the first video by receiving the first video from another computer. The other computer, for example, is the user terminal 202. The other computer, for example, may be the video equipment 203.

The obtaining unit 701, more specifically, obtains the first video in an instance in which the first video is used by the calculating unit 702. As a result, the obtaining unit 701 may enable use of the first video by the calculating unit 702. Thus, the obtaining unit 701 may enable calculation of a feature by the calculating unit 702, the feature being related to a behavior of the first person captured in the first video. The obtaining unit 701, more specifically, needs not obtain the first video when the first video is not used by the calculating unit 702.

The obtaining unit 701, for example, obtains the second video. The obtaining unit 701, more specifically, obtains the second video by receiving input of the second video based on an operation input by the user. The obtaining unit 701, more specifically, receives the second video from another computer and thereby, obtains the second video. The other computer, for example, is the user terminal 202. The other computer may be, for example, the video equipment 203.

The obtaining unit 701, more specifically, obtains the second video in an instance in which the second video is used by the calculating unit 702. As a result, the obtaining unit 701 may enable use of the second video by the calculating unit 702. Thus, the obtaining unit 701 may enable calculation of a feature by the calculating unit 702, the feature being related to a behavior of the second person captured in the second video. The obtaining unit 701, more specifically, needs not obtain the second video when the second video is not used by the calculating unit 702.

The obtaining unit 701, for example, among the multiple types that classify features related to behaviors of a person, obtains, as a specified combination, a combination of types belonging to each of one or more aspects that define a specific behavior and associates the combination with the specific behavior. More specifically, based on an operation input by the user, the obtaining unit 701 receives input of a specified combination associated with a specific behavior and thereby obtains the specified combination. The obtaining unit 701, more specifically, receives, from another computer, a specified combination associated with a specific behavior and thereby, obtains the specified combination. As a result, the obtaining unit 701 may narrow down the features used to when the behavior recognition model is trained.

The obtaining unit 701, for example, among the multiple types, may obtain, as a specified combination, a combination of types belonging to each of one or more aspects defining each of multiple elements that form a specific behavior, the obtaining unit 701 may associate the combination with the specific behavior. The obtaining unit 701, more specifically, obtains a specified combination by receiving input of the specified combination associated with a specific behavior, based on an operation input by the user. The obtaining unit 701, more specifically, obtains a specified combination by receiving, from another computer, the specified combination associated with a specific behavior. As a result, the obtaining unit 701 may narrow down the features used when the behavior recognition model is trained.

The obtaining unit 701, for example, obtains multiple features calculable based on the first video and related to a behavior of the first person captured in the first video. The obtaining unit 701, more specifically, obtains the multiple features by receiving input of the multiple features, based on an operation input by the user. The obtaining unit 701, more specifically, obtains the multiple features by receiving the multiple features from another computer.

The obtaining unit 701, more specifically, obtains the multiple features in an instance in which the multiple features are not calculated by the calculating unit 702. As a result, the obtaining unit 701 may enable training of the behavior recognition model. The obtaining unit 701 enables calculation of the multiple features by the calculating unit 702 to be omitted and thereby may reduce the amount of processing in the information processing device 100. The obtaining unit 701, more specifically, needs not obtain the multiple features in an instance in which the multiple features are calculated by the calculating unit 702.

The obtaining unit 701, for example, obtains multiple features that are calculable based on the second video and related to a behavior of the second person captured in the second video. The obtaining unit 701, more specifically, obtains the multiple features by receiving input of the multiple features, based on an operation input by the user. The obtaining unit 701, more specifically, obtains the multiple features by receiving the multiple features from another computer.

The obtaining unit 701, more specifically, obtains the multiple features in an instance in which the multiple features are not calculated by the calculating unit 702. As a result, the obtaining unit 701 may enable training of the behavior recognition model. The obtaining unit 701 enables calculation of the multiple features by the calculating unit 702 to be omitted and may reduce the amount of processing in the information processing device 100. The obtaining unit 701, more specifically, needs not obtain the multiple features in an instance in which the multiple features are calculated by the calculating unit 702.

The obtaining unit 701, for example, among the multiple features calculable based on the first video and related to a behavior of the first person captured in the first video, obtains the features of the specified combination. The obtaining unit 701, more specifically, among the multiple features related to a behavior of the first person captured in the first video, obtains the features of the specified combination by receiving input of the features of the specified combination, based on an operation input by the user.

The obtaining unit 701, more specifically, among the multiple features related to a behavior of the first person captured in the first video, obtains the features of the specified combination from another computer and thereby, obtains the features of the specified combination. The obtaining unit 701, more specifically, when obtaining the multiple features calculable based on the first video and related to a behavior of the first person captured in the first video, extracts the features of the specified combination from the multiple features and thereby obtains the features of the specified combination.

The obtaining unit 701, more specifically, obtains the features of the specified combination in an instance in which the features of the specified combination are not calculated by the calculating unit 702. As a result, the obtaining unit 701 may enable training of the behavior recognition model. The obtaining unit 701 enables calculation of the features of the specified combination by the calculating unit 702 to be omitted and may reduce the amount of processing in the information processing device 100. The obtaining unit 701, more specifically, needs not obtain the features of a specified combination in an instance in which the features of a specified combination are calculated by the calculating unit 702.

The obtaining unit 701, for example, among the multiple features calculable based on the second video and related to a behavior of the second person captured in the second video, obtains the features of a specified combination. The obtaining unit 701, more specifically, among the multiple features related to a behavior of the second person captured in the second video, receives input of the features of a specified combination, based on an operation input by the user and thereby, obtains the features of the specified combination.

The obtaining unit 701, more specifically, among the multiple features related to a behavior of the second person captured in the second video, receives the features of a specified combination from another computer and thereby, obtains the features of the specified combination. The obtaining unit 701, more specifically, when obtaining the multiple features calculable based on the second video and related to a behavior of the second person captured in the second video, extracts the features of a specified combination from the multiple features and thereby, obtains the features of the specified combination.

The obtaining unit 701, more specifically, obtains the features of the specified combination in an instance in which the features of the specified combination are not calculated by the calculating unit 702. As a result, the obtaining unit 701 may obtain input of the behavior recognition model. The obtaining unit 701 enables calculation of the features of the specified combination by the calculating unit 702 to be omitted and may reduce the amount of processing in the information processing device 100. The obtaining unit 701, more specifically, needs not obtain the features of a specified combination in an instance in which the features of the specified combination are calculated by the calculating unit 702.

The obtaining unit 701, for example, obtains the first model, which outputs the coordinates of each of the one or more parts of a person captured in an input video. The obtaining unit 701, more specifically, receives input of the first model based on an operation input by the user and thereby, obtains the first model. The obtaining unit 701, more specifically, receives the first model from another computer and thereby, obtains the first model.

The obtaining unit 701, more specifically, obtains the first model in an instance in which the first model is not trained by the training unit 703. As a result, the obtaining unit 701 may enable analysis of a video and enable the coordinates of each of the one or more parts of a person captured in the video to be obtained. The obtaining unit 701, more specifically, needs not obtain the first model in an instance in which the first model is trained by the training unit 703.

The obtaining unit 701, for example, obtains the first training data that is used to train the first model. The obtaining unit 701, more specifically, obtains the first training data by receiving input of the first training data, based on an operation input by the user. The obtaining unit 701, more specifically, obtains the first training data by receiving the first training data from another computer.

The obtaining unit 701, more specifically, obtains the first training data in an instance in which the first model is trained by the training unit 703. As a result, the obtaining unit 701 may enable training of the first model. The obtaining unit 701, more specifically, needs not obtain the first training data in an instance in which the obtaining unit 701 obtains the first model.

The obtaining unit 701, for example, obtains the second model, which detects a location or an object captured in an input video. The obtaining unit 701, more specifically, receives input of the second model, based on an operation input by the user and thereby, obtains the second model. The obtaining unit 701, more specifically, receives the second model from another computer and thereby, obtains the second model.

The obtaining unit 701, more specifically, obtains the second model in an instance in which the second model is not trained by the training unit 703. As a result, the obtaining unit 701 may enable analysis of a video and enable detection of a location or object captured in the video. The obtaining unit 701, more specifically, needs not obtain the second model in an instance in which the second model is trained by the training unit 703.

The obtaining unit 701, for example, obtains the second training data that is used when the second model is trained. The obtaining unit 701, more specifically, receives input of the second training data, based on an operation input by the user and thereby, obtains the second training data. The obtaining unit 701, more specifically, obtains the second training data from another computer and thereby, obtains the second training data.

The obtaining unit 701, more specifically, obtains the second training data in an instance in which the second model is trained by the training unit 703. As a result, the obtaining unit 701 may enable training of the second model. The obtaining unit 701, more specifically, needs not obtain the second training data in an instance in which the second model is obtained by the obtaining unit 701.

The obtaining unit 701 may receive a start trigger for starting a process of any one of the functional units. The start trigger, for example, is an instance of a predetermined operation being input by the user. The start trigger, for example, may be the reception of predetermined information from another computer. The start trigger, for example, may be an output of predetermined information by any of the functional units.

The obtaining unit 701, more specifically, may receive a start trigger for starting a process of the calculating unit 702. The obtaining unit 701, more specifically, may regard the obtaining of the first video by the obtaining unit 701 as the start trigger for starting a process of the calculating unit 702. The obtaining unit 701, more specifically, may regard the obtaining of the second video by the obtaining unit 701, as the start trigger for starting a process of the calculating unit 702.

The obtaining unit 701, more specifically, may receive a start trigger for starting a process of the training unit 703. The obtaining unit 701, more specifically, may regard the obtaining of the features of a specified combination corresponding to the first video by the obtaining unit 701 as a start trigger for starting a process of the training unit 703. The obtaining unit 701, more specifically, may regard the calculation of the features of a specified combination corresponding to the first video by the calculating unit 702, as the start trigger for starting a process of the training unit 703.

The obtaining unit 701, more specifically, may receive a start trigger for starting a process of the inferencing unit 704. The obtaining unit 701, more specifically, may regard the obtaining of the features of a specified combination that corresponds to the second video by the obtaining unit 701, as the start trigger for starting a process of the inferencing unit 704. The obtaining unit 701, more specifically, may regard the calculation of the features of a specified combination corresponding to the second video by the calculating unit 702, as the start trigger for starting a process of the inferencing unit 704.

The calculating unit 702 calculates a feature related to a behavior of a person. The calculating unit 702, for example, among the multiple features calculable based on the first video and related to a behavior of the first person captured in the first video, calculates the features of the specified combination.

The calculating unit 702, more specifically, analyzes the first video and thereby, calculates the coordinates of each of one or more parts of the first person captured in the first video. The calculating unit 702, more specifically, inputs the first video to the first model and thereby, calculates the coordinates of each of one or more parts of the first person captured in the first video. As a result, the calculating unit 702 may obtain a guideline for calculating the features.

The calculating unit 702, more specifically, analyzes the first video and thereby, detects in addition to the first person, another object or location captured in the first video. The calculating unit 702, more specifically, inputs the first video to the second model and thereby, detects in addition to the first person, another object or location captured in the first video. As a result, the calculating unit 702 may obtain a guideline for calculating the features.

More specifically, when a type of a feature belonging to the first aspect is included in a specified combination, the calculating unit 702 calculates, based on the calculated coordinates, one or more features that belong to the first aspect and are of a type included in the specified combination. As a result, the calculating unit 702 may obtain a feature to be used for training the behavior recognition model.

More specifically, when a type of a feature belonging to the second aspect is included in a specified combination, the calculating unit 702 calculates, based on the calculated coordinates, one or more features that belong to the second aspect and are of a type included in the specified combination. As a result, the calculating unit 702 may obtain a feature to be used for training the behavior recognition model.

More specifically, when a type of a feature belonging to the third aspect is included in a specified combination, the calculating unit 702 calculates, based on the calculated coordinates, one or more features that belong to the third aspect and are of a type included in the specified combination. As a result, the calculating unit 702 may obtain a feature to be used for training the behavior recognition model.

More specifically, when a type of a feature belonging to the fourth aspect is included in a specified combination, the calculating unit 702 calculates, based on the calculated coordinates, one or more features that belong to the fourth aspect and are of a type included in the specified combination. As a result, the calculating unit 702 may obtain a feature to be used for training the behavior recognition model.

The calculating unit 702, for example, analyzes the first video and thereby, may calculate multiple features related to a behavior of the first person captured in the first video.

The calculating unit 702, more specifically, analyzes the first video and thereby, calculates the coordinates of each of one or more parts of the first person captured in the first video. The calculating unit 702, more specifically, inputs the first video to the first model and thereby, calculates the coordinates of each of one or more parts of the first person captured in the first video. As a result, the calculating unit 702 may obtain a guideline for calculating the features.

The calculating unit 702, more specifically, analyzes the first video and thereby, detects in addition to the first person, another object or location captured in the first video. The calculating unit 702, more specifically, inputs the first video to the second model and thereby, detects in addition to the first person, another object or location captured in the first video. As a result, the calculating unit 702 may obtain a guideline for calculating the features.

The calculating unit 702, more specifically, calculates one or more features belonging to the first aspect, based on the calculated coordinates. As a result, the calculating unit 702 may obtain a candidate of a feature to be used for training the behavior recognition model.

More specifically, the calculating unit 702 calculates, based on the calculated coordinates, one or more features belonging to the second aspect. As a result, the calculating unit 702 may obtain a candidate of a feature to be used for training the behavior recognition model.

More specifically, the calculating unit 702 calculates, based on the calculated coordinates and another detected object or location, one or more features belonging to the third aspect. As a result, the calculating unit 702 may obtain a candidate of a feature to be used for training the behavior recognition model.

The calculating unit 702, more specifically calculates one or more features belonging to the fourth aspect, based on the calculated features. As a result, the calculating unit 702 may obtain a candidate of a feature to be used for training the behavior recognition model.

Further, the calculating unit 702, for example, extracts the features of the types in a specified combination, from the multiple features related to a behavior of the first person captured in the first video. As a result, the calculating unit 702 may obtain a feature to be used for training the behavior recognition model.

The calculating unit 702, for example, calculates the features of the specified combination, among the multiple features calculable based on the second video and related to a behavior of the second person captured in the second video.

The calculating unit 702, more specifically, analyzes the second video and thereby, calculates coordinates of each of one or more parts of the second person captured in the second video. The calculating unit 702, more specifically, inputs the second video to the second model and thereby, calculates coordinates of each of one or more parts of the second person captured in the second video. As a result, the calculating unit 702 may obtain a guideline for calculating the features.

The calculating unit 702, more specifically, analyzes the second video and thereby, detects in addition to the second person, another object or location captured in the second video. The calculating unit 702, more specifically, inputs the second video to the second model and thereby, detects in addition to the second person, another object or location captured in the second video. As a result, the calculating unit 702 may obtain a guideline for calculating the features.

More specifically, when a type of a feature belonging to the second aspect is included in a specified combination, the calculating unit 702 calculates, based on the calculated coordinates, one or more features that belong to the second aspect and are of a type included in the specified combination. As a result, the calculating unit 702 may obtain a feature to be input to the behavior recognition model.

More specifically, when a type of a feature belonging to the second aspect is included in a specified combination, the calculating unit 702 calculates, based on the calculated coordinates, one or more features that belong to the second aspect and are of a type included in the specified combination. As a result, the calculating unit 702 may obtain a feature to be input to the behavior recognition model.

More specifically, when a type of a feature belonging to the third aspect is included in a specified combination, the calculating unit 702 calculates, based on the calculated coordinates and another detected object or location, one or more features that belong to the third aspect and are of a type included in the specified combination. As a result, the calculating unit 702 may obtain a feature to be input to the behavior recognition model.

More specifically, when a type of a feature belonging to the fourth aspect is included in a specified combination, the calculating unit 702 calculates, based on the calculated features, one or more features that belong to the fourth aspect and are of a type included in the specified combination. As a result, the calculating unit 702 may obtain a feature to be input to the behavior recognition model.

The calculating unit 702, for example, analyzes the second video and thereby, may calculate multiple features related to a behavior of the second person captured in the second video.

The calculating unit 702, more specifically, analyzes the second video and thereby, calculates coordinates of each of one or more parts of the second person captured in the second video. The calculating unit 702, more specifically, inputs the second video to the second model and thereby, calculates coordinates of each of one or more parts of the second person captured in the second video. As a result, the calculating unit 702 may obtain a guideline for calculating the features.

The calculating unit 702, more specifically, analyzes the second video and thereby, detects in addition to the second person, another object or location captured in the second video. The calculating unit 702, more specifically, inputs the second video to the second model and thereby, detects in addition to the second person, another object or location captured in the second video. As a result, the calculating unit 702 may obtain a guideline for calculating the features.

The calculating unit 702, more specifically, calculates, based on the calculated coordinates, one or more features belonging to the second aspect. As a result, the calculating unit 702 may obtain a candidate of a feature to be input to the behavior recognition model.

The calculating unit 702, more specifically, calculates, based on the calculated coordinates, one or more features belonging to the second aspect. As a result, the calculating unit 702 may obtain a candidate of a feature to be input to the behavior recognition model.

The calculating unit 702, more specifically, calculates one or more features belonging to the third aspect, based on the calculated coordinates and another detected object or location. As a result, the calculating unit 702 may obtain a candidate of a feature to be input to the behavior recognition model.

The calculating unit 702, more specifically, based on the calculated features, calculates one or more features belonging to the fourth aspect. As a result, the calculating unit 702 may obtain a candidate of a feature to be input to the behavior recognition model.

Further, the calculating unit 702, for example, extracts the features of the types in a specified combination, from the multiple features related to a behavior of the second person captured in the second video. As a result, the calculating unit 702 may obtain a feature to be input to the behavior recognition model.

The training unit 703 trains the behavior recognition model, based on the features obtained by the obtaining unit 701 or calculated by the calculating unit 702. The training unit 703, for example, generates training data associating a feature of a type in a specified combination and corresponding to the first video, and a correct answer to whether a behavior of the first person captured in the first video is a specific behavior. The training unit 703, for example, trains the behavior recognition model, based on the generated training data. The training unit 703, more specifically, uses error backpropagation to train the behavior recognition model, based on the generated training data. The training unit 703, more specifically, may use random forest to train the behavior recognition model, based on the generated training data.

Thus, the training unit 703 may train the behavior recognition model, based on a portion of the features narrowed down from among the multiple features. Thus, the training unit 703 may reduce the processing load and processing time for training the behavior recognition model. The training unit 703, when training the behavior recognition model, may refer to some features that are suitable for the purpose of recognizing a specific behavior and may easily train the behavior recognition model having accuracy in recognizing a specific behavior.

The training unit 703 trains the first model, based on the first training data. The training unit 703, more specifically, uses error backpropagation to train the first model. The training unit 703, more specifically, may use random forest to train the first model, based on the first training data. As a result, the training unit 703 may analyze a video and may enable the coordinates of each of the one or more parts of a person captured in the video to be obtained.

The training unit 703 trains the second model, based on the second training data. The training unit 703, more specifically, uses error backpropagation to train the second model. The training unit 703, more specifically, may use random forest to train the second model, based on the second training data. As a result, the training unit 703 may analyze a video and may enable detection of an object or location captured in the video.

The inferencing unit 704 recognizes a behavior of the second person captured in the second video. The inferencing unit 704, for example, determines whether a behavior of the second person is a specific behavior. The inferencing unit 704, more specifically, among the multiple features calculable based on the second video and related to a behavior of the second person captured in the second video, inputs features of the types in a specified combination to the trained behavior recognition model. The inferencing unit 704, more specifically, determines whether a behavior of the second person is a specific behavior, based on output of the behavior recognition model. As a result, the inferencing unit 704 may accurately recognize a behavior of the second person captured in the second video.

The output unit 705 outputs process results of at least any one of the functional units. The form of output, for example, is display on a display, print out at a printer, transmission to an external device by the network I/F 303, or storage to a storage region such as the memory 302 and the recording medium 305. As a result, the output unit 705 enables notification of process results of at least any one of the functional units to the user and may increase the convenience of the information processing device 100.

The output unit 705, for example, outputs the behavior recognition model trained by the training unit 703. The output unit 705, more specifically, outputs the behavior recognition model so that the user may refer to the behavior recognition model. The output unit 705, more specifically, transmits the behavior recognition model to another computer. As a result, the output unit 705 may enable external use of the behavior recognition model.

The output unit 705, for example, outputs a result of the inferencing unit 704 recognizing a behavior of the second person captured in the second video. The output unit 705, more specifically, outputs a result of recognizing a behavior of the second person captured in the second video so that the user may refer to the result. The output unit 705, more specifically, transmits a result of recognizing a behavior of the second person captured in the second video to another computer. As a result, the output unit 705 may enable external use of a result of recognizing a behavior of the second person captured in the second video.

Herein, while an instance is described in which the information processing device 100 includes the obtaining unit 701, the calculating unit 702, the training unit 703, the inferencing unit 704, and the output unit 705, configuration is not limited hereto. For example, in the information processing device 100, any one of the functional units may be omitted. More specifically, in the information processing device 100, the inferencing unit 704 may be omitted.

### (Example of operation of the information processing device 100)

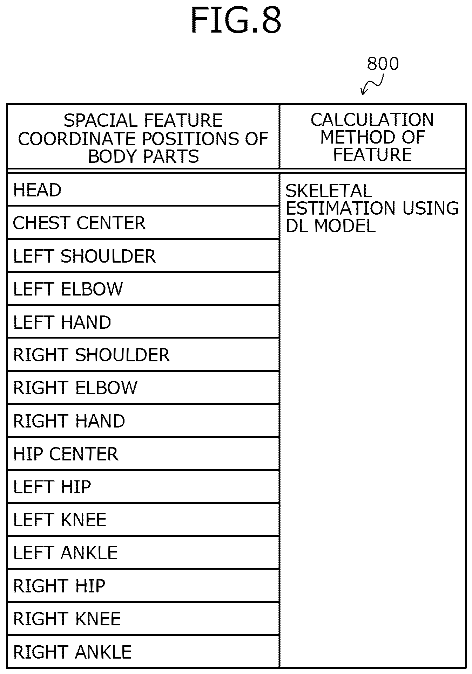

Next, with reference to Figs. 8 to 20, an example of operation of the information processing device 100 is described. For example, first, with reference to Figs. 8 to 11, an example of features belonging to the first aspect is described. The first aspect is a spatial aspect. In the description hereinafter, a feature belonging to the first aspect may be indicated at "spatial feature".

Figs. 8, 9, 10, and 11 are diagrams depicting examples of features belonging to the first aspect. In Fig. 8, as depicted in table 800, a spatial feature, for example, is a coordinate position of any one of multiple body parts of a person. A coordinate position, for example, is a coordinate position of any one of multiple body parts of a person, in three-dimensional coordinates based on specific body parts. A coordinate position, for example, may be a coordinate position of any one of multiple body parts of a person, in two-dimensional coordinates based on specific body parts.

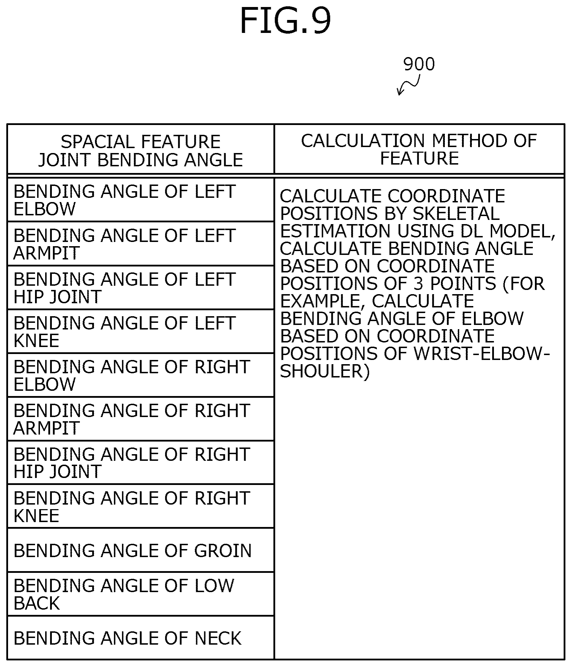

Coordinate positions of body parts are, for example, the coordinate position of the head, the coordinate position of the chest center, the coordinate position of the left shoulder, the coordinate position of the left elbow, the coordinate position of the left hand, the coordinate position of the right shoulder, the coordinate position of the right elbow, and the coordinate position of the right hand. Coordinate positions of body parts are, for example, the coordinate position of the hip center, the coordinate position of the left hip, the coordinate position of the left knee, the coordinate position of the left ankle, the coordinate position of right hip, the coordinate position of the right knee, and the coordinate position of the right ankle. Coordinate positions of body parts, for example, are calculated by skeletal estimation, using a DL model. Next, description is given with reference to Fig. 9.

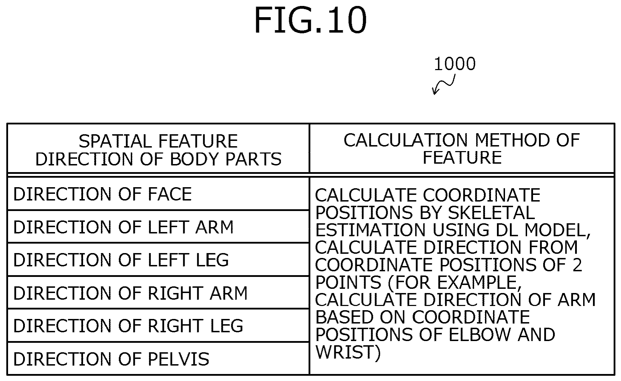

In Fig. 9, as depicted in table 900, a spatial feature, for example, is a bending angle of any one of multiple body parts of a person. A bending angle of an arbitrary body part, for example, is an angle formed by lines parallel to the direction to the arbitrary body part from each two body parts coupled the arbitrary body part. A bending angle of a body part, for example, is a bending angle of the left elbow, a bending angle of the left armpit, a bending angle of the left hip joint, a bending angle of the left knee, a bending angle of the right elbow, a bending angle of the right armpit, a bending angle of the right hip joint, a bending angle of the right knee, a bending angle of the groin, a bending angle of the low back, or a bending angle of the neck. A bending angle of a body part, for example, is calculated based on each coordinate position of three body parts coupled to each other. Next, description is given with reference to Fig. 10.

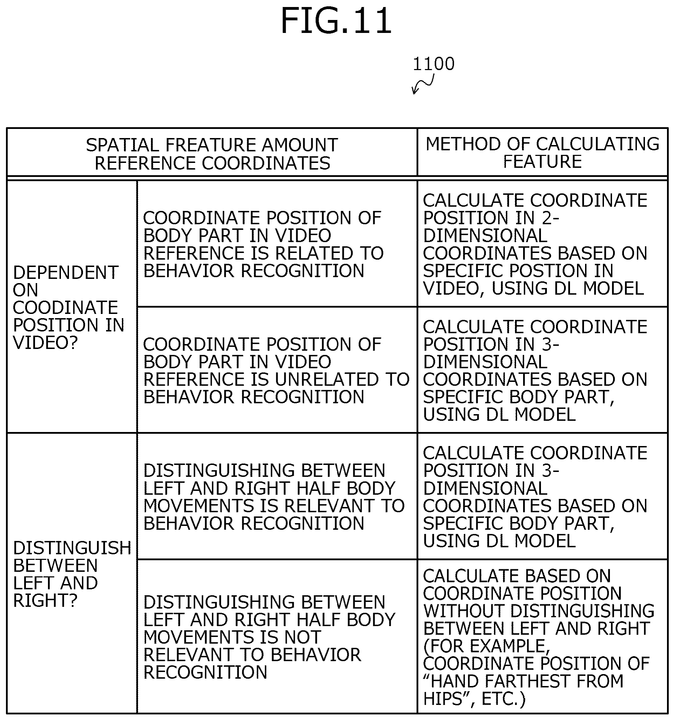

In Fig. 10, as depicted in table 1000, a spatial feature, for example, is a direction of any one of multiple body parts of a person. A direction of an arbitrary body part, for example, is a direction to the coordinate position of the arbitrary body part from the coordinate position of another body part coupled to the arbitrary body part. The direction of a body part, for example, is a direction of the face, a direction of the left arm, a direction of the left leg, a direction of the right arm, a direction of the right leg, a direction of the low back. A direction of a body part, for example, is calculated based on the coordinate positions of two body parts. Next, description is given with reference to Fig. 11.

In Fig. 11, as depicted in table 1100, for example, when a coordinate position of a body part in a video reference is related to behavior recognition, the spatial feature, in two-dimensional coordinates based on a specific position in the video, is the coordinate position of any one of the multiple body parts of a person. The coordinate position is calculated by skeletal estimation, using a DL model.

For example, in an instance in which the coordinate position of a body part in the video reference is unrelated to behavior recognition, the spatial feature, in three-dimensional coordinates based on a specific body part of a person, is a coordinate position of any one of the multiple body parts of a person. In other words, for example, in an instance in which the coordinate position of a body part of a person reference is related to behavior recognition, the spatial feature, in three-dimensional coordinates based on a specific body part of a person, is a coordinate position of any one of the multiple body parts of a person. The coordinate position is calculated by skeletal estimation, using a DL model.

When distinguishing between left and right body parts is unrelated to behavior recognition, for example, the spatial feature, in three-dimensional coordinates based on a specific body part of a person, is the coordinate position of a body part not distinguishing between left and right, among the multiple body parts of a person. The coordinate position of a body part not distinguishing between left and right, for example, is a coordinate position obtained by performing a predetermined calculation process with respect to a body part of the left side, a mutually corresponding body part on the right side, and the coordinate position of each body part. The coordinate position of a body part not distinguishing between left and right, more specifically, with respect to the coordinate position of the left hand and the coordinate position of the right hand, is the coordinate position that is farther from the coordinate position of the hips. The coordinate positions are calculated by skeletal estimation, using a DL model.

For example, when distinguishing between left and right body parts is related to behavior recognition, the spatial feature, in three-dimensional coordinates based on a specific body part of a person, is the coordinate position of a body part distinguishing between left and right, among the multiple body parts of a person. The coordinate position is calculated by skeletal estimation, using a DL model.

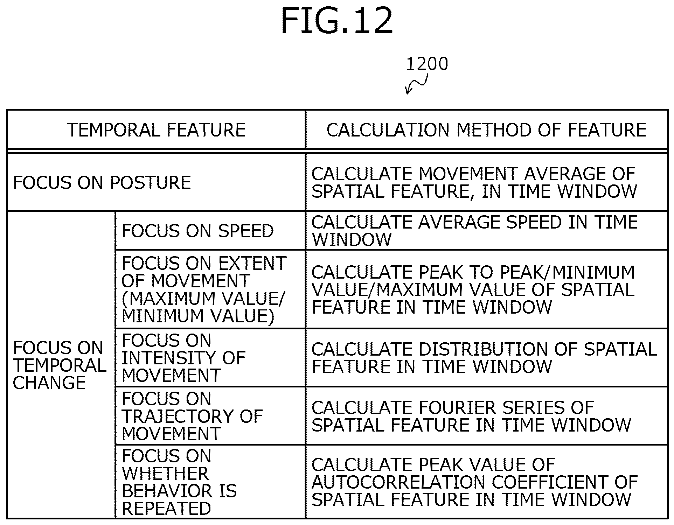

Next, with reference to Fig. 12, an example of features belonging to the second aspect is described. The second aspect is a temporal aspect. In the description hereinafter, a feature belonging to the second aspect may be indicated as "temporal feature".

Fig. 12 is diagram depicting an example of features belonging to the second aspect. In Fig. 12, as depicted in table 1200, a temporal feature, for example, is a feature related to resting posture. A temporal feature, more specifically, is a spatial feature in an interval in which a person is in a resting posture. A temporal feature, more specifically, may be a moving average of spatial features in a time window of a predetermined time range.

A temporal feature, for example, in a time window of a predetermined time range, is an average speed of a person or an average speed of any one of multiple body parts of a person. A temporal feature, for example, in a time window of a predetermined time range, is a Peak to Peak, a maximum value, or a minimum value of a spatial feature.

A temporal feature, for example, in a time window of a predetermined time range, is a distribution of a spatial feature. A temporal feature, for example, in a time window of a predetermined time range, is a Fourier series of spatial features. A temporal feature, for example, in a time window of a predetermined time range, is a peak value of an autocorrelation coefficient of a spatial feature.

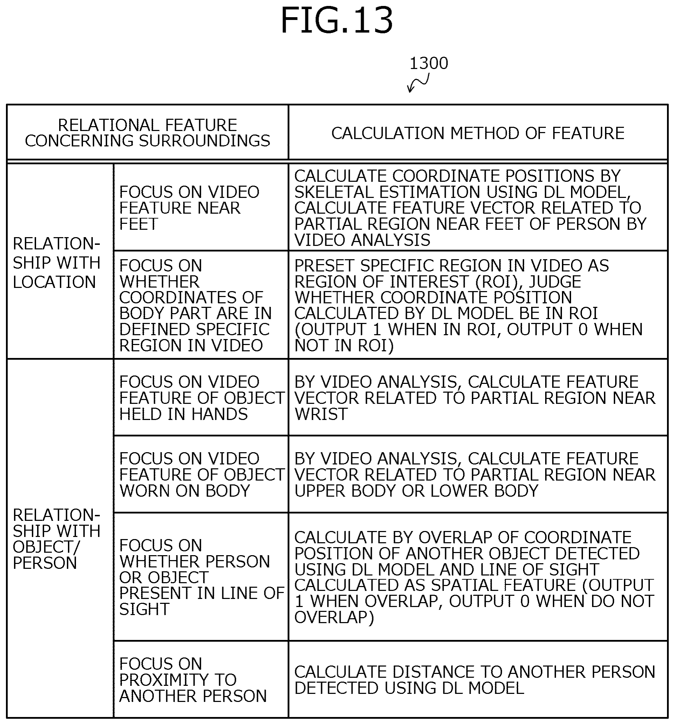

Next, an example of features belonging to the third aspect is described with reference to Fig. 13. **In** the description hereinafter, a feature belonging to the third aspect may be indicated as "relational feature".

Fig. 13 is a diagram depicting an example of features belonging to the third aspect. **In** Fig. 13, as depicted in table 1300, a relational feature, for example, is a feature related to a relationship between a person and a location. A relational feature, more specifically, is calculated based on a coordinate position of a body part of a person and an image feature of the person's feet. An image feature, for example, is a feature vector related to an entire video or a partial region of a video. An image feature, more specifically, is a feature vector related to a partial region of a vicinity of the feet of a person, in a video. An image feature, more specifically, represents a location.

A relational feature, more specifically, may be calculated based on whether a coordinate position of a body part of a person, is included in a specific region in a video set in advance as a region of interest. A relational feature, more specifically, is a value of 1 when a coordinate position of a body part of a person, is included in a specific region in a video set in advance as a region of interest and is a value of 0 when a coordinate position of a body part of a person, is not included in a specific region in a video.

Further, a relational feature, for example, is a feature concerning a relationship between a person and another object. Another object, for example, is a non-living thing. Another object, more specifically, is an object in the possession of a person. Another object, for example, includes living things. Another object, for example, includes other people.

A relational feature, more specifically, may be calculated based on a coordinate position of a body part of a person, and an image feature of another object captured in an image of an area of a hand of the person. An image feature, for example, is a feature vector related to an entire video or a partial region of a video. An image feature, more specifically, is a feature vector related to a partial region of a vicinity of a wrist of a person, in a video. An image feature, more specifically, represents an object held in a hand of a person.

A relational feature, more specifically, is calculated based on the coordinate position of a body part of a person and an image feature of an image of the upper body or lower body of the person. An image feature, for example, is a feature vector related to an entire video or a partial region of a video. An image feature, more specifically, is a feature vector related to a partial region in a video, near the upper body or lower body of a person. An image feature, more specifically, represents an object worn on the body of a person. The object, for example, is clothing.

A relational feature, more specifically, is calculated based on whether a coordinate position of a body part of a person and another object are present in a line of sight of the person. The relational feature, more specifically, is a value of 1, when the coordinate position of the other object and a direction vector representing the line of sight calculated as a spatial feature overlap. The relational feature, more specifically, is a value of 0, when the coordinate position of the other object and the direction vector representing the line of sight calculated as a spatial feature do not overlap.

A relational feature, more specifically, is calculated based on the coordinate position of a body part of a person and the coordinate position of another body part of the person. A relational feature, more specifically, is a distance between the coordinate position of a body part of a person and the coordinate position of another person or the coordinate position of a body part of another person.

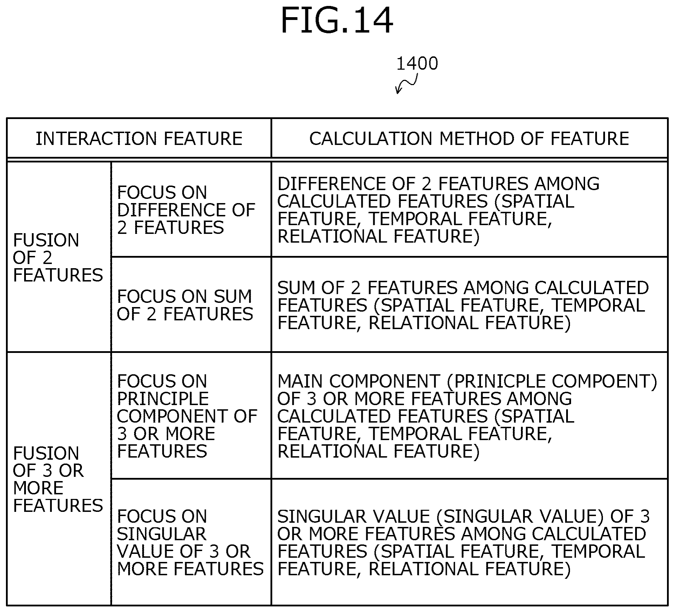

Next, with reference to Fig. 14, an example of features belonging to the fourth aspect is described. In the description hereinafter, a feature belonging to the fourth aspect may be indicated as "interaction feature".

Fig. 14 is a diagram depicting an example of features belonging to the fourth aspect. In Fig. 14, as depicted in table 1400, an interaction feature, for example, is a difference of any two features among one or more features belonging to the first aspect, one or more features belonging to the second aspect, and one or more features belonging to the third aspect. Further, an interaction feature, for example, is a sum of any two features among one or more features belonging to the first aspect, one or more features belonging to the second aspect, and one or more features belonging to the third aspect.

Further, an interaction feature, for example, is a principal component of any three or more features among one or more features belonging to the first aspect, one or more features belonging to the second aspect, and one or more features belonging to the third aspect. Further, an interaction feature, for example, is a singular value of any three or more features among one or more features belonging to the first aspect, one or more features belonging to the second aspect, and one or more features belonging to the third aspect.

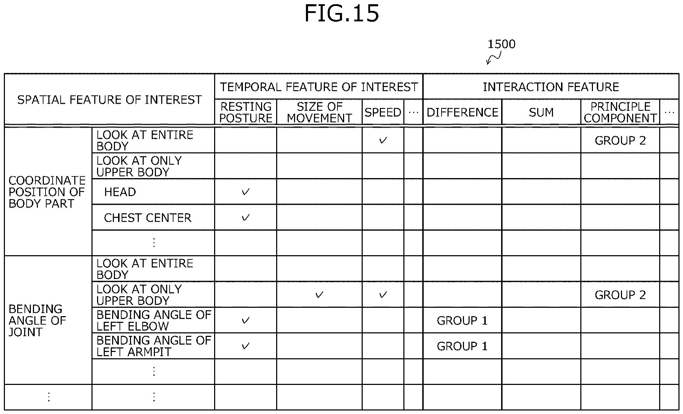

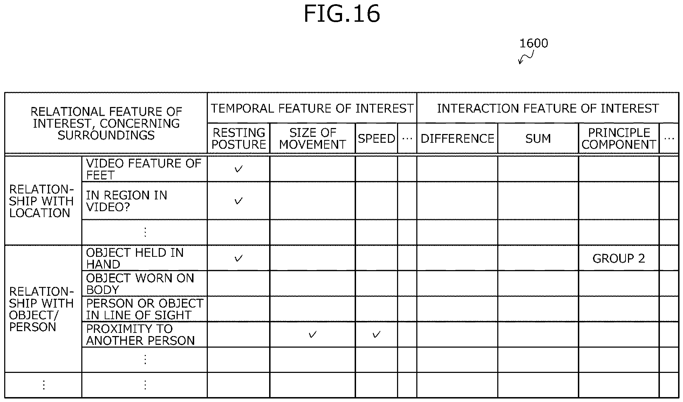

Next, with reference to Figs. 15 and 16, an example of the information processing device 100 receiving selection of a type of a feature is described.

Figs. 15 and 16 are diagrams depicting examples receiving selection of a type of feature. In Fig. 15, the user terminal 202, for example, displays an input screen 1500. The input screen 1500, for example, receives a check mark as to whether a feature among temporal features "resting posture", "size of movement", "speed", etc. is to be calculated based on a spatial feature "coordinate position of body part", etc. The user terminal 202 receives, as a selected type of temporal feature, the type of the checked temporal feature. In the example depicted in Fig. 15, the user terminal 202, more specifically, receives the type of temporal feature related to the resting posture of the body part "the head" as a selected type of temporal feature.

The input screen 1500, for example, among spatial feature "coordinate position of body part", etc., receives specification of a group thereof for calculating an interaction feature. The user terminal 202 receives, as a selected type of temporal feature, the type of an interaction feature related to the specified group. In the example depicted in Fig. 15, the user terminal 202, more specifically, receives, as a selected type of temporal feature, the type of an interaction feature representing a difference of the spatial features in group 1, which includes "bending angle of left elbow" and "bending angle of left armpit".

The user terminal 202, when receiving selection of a type of feature via the input screen 1500, transmits a combination of the selected types of temporal features to the information processing device 100. The information processing device 100 receives the combination of selected types of temporal features from the user terminal 202. Herein, while an instance is described in which the user terminal 202 displays the input screen 1500, configuration is not limited hereto. For example, the information processing device 100 may display the input screen 1500 and directly receive selection of a type of a feature. Next, description is given with reference to Fig. 16.

In Fig. 16, the user terminal 202, for example, displays an input screen 1600. The input screen 1600, for example, receives a check mark as to whether a feature among temporal features "resting posture", "size of movement", "speed", etc. is to be calculated based on a relational feature "image feature of feet", etc. The user terminal 202 receives, as a selected type of temporal feature, the type of the checked temporal feature. In the example depicted in Fig. 16, the user terminal 202, more specifically, receives, as a selected type of temporal feature, the type of the temporal feature related to the resting posture for the relational feature "video feature near feet".

The input screen 1600, for example, among relational features "image feature of feet", etc., receives specification of a group thereof for calculating an interaction feature. The user terminal 202 receives, as a selected type of temporal feature, the type of an interaction feature related to the specified group. In the example depicted in Fig. 16, the user terminal 202, more specifically, receives, as a selected type of temporal feature, the type of an interaction feature representing a principal component of the relational features in group 2, which includes the relational feature "object held in hand".

The user terminal 202, when receiving selection of a type of feature via the input screen 1600, transmits a combination of the selected types of temporal features to the information processing device 100. The information processing device 100 receives the combination of selected types of temporal features from the user terminal 202. Herein, while an instance is described in which the user terminal 202 displays the input screen 1600, configuration is not limited hereto. For example, the information processing device 100 may display the input screen 1600 and directly receive selection of a type of a feature.

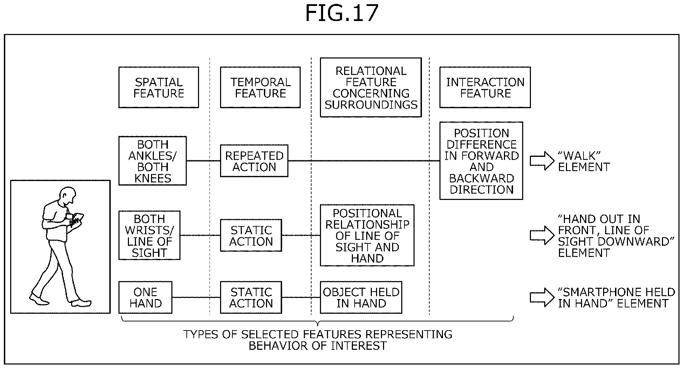

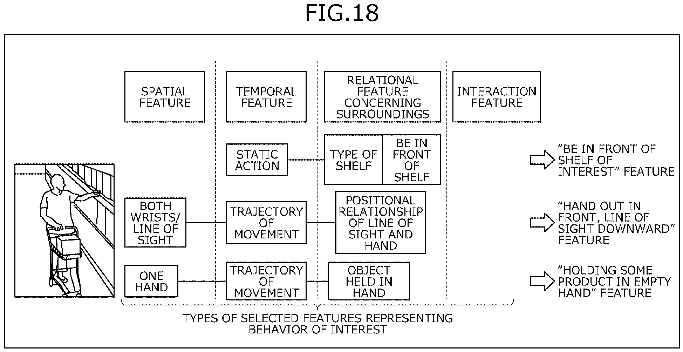

Figs. 17 and 18 are diagrams depicting examples of a relationship between a specific behavior and a selected feature. In Fig. 17, the user terminal 202, via the input screen 1500 or the input screen 1600, etc., receives selection of a combination of types of features corresponding to a specific behavior "smartphone use while walking". "Smartphone use while walking", for example, is formed by element "walk", element "hand out in front, line of sight downward", and element "smartphone held in hand".

The user terminal 202, more specifically, receives selection of the types of the features that represent each of the elements forming "smartphone use while walking". More specifically, element "walk" is represented by features such as coordinate positions of both ankle, coordinate positions of both knees, repeated action of both ankles, repeated action of both knees, and difference of coordinate positions in forward and backward directions of person.

More specifically, element "hand out in front, line of sight downward" is represented by features such as coordinate positions of both wrists, line of sight, static action of both wrists, and positional relationship of wrist and line of sight. More specifically, element "smartphone held in hand" is represented by features such as coordinate position of one hand, static action of one hand, and object held in hand. Next, description is given with reference to Fig. 18.

In Fig. 18, the user terminal 202, via the input screen 1500 or the input screen 1600, etc., receives selection of a combination of types of features corresponding to a specific behavior "take product from shelf". "Take product from shelf", for example, is formed by element "is in front of shelf", element "line of sight and hand extended toward shelf", and element "product held in empty hand".

The user terminal 202, more specifically, receives selection of the types of features representing each of the elements forming "take product from shelf". More specifically, element "is in front of shelf" is represented by the types: static action of person and shelf present in surroundings of person, and the feature of whether coordinate position of person is in front of shelf.

More specifically, element "line of sight and hand extended toward shelf" is represented by features such as coordinate positions of both wrists, line of sight, trajectory of movement of both wrists, and positional relationship of wrist and line of sight. More specifically, element "product held in empty hand" is represented by features such as coordinate position of one hand, trajectory of movement of one hand, and object held in hand.

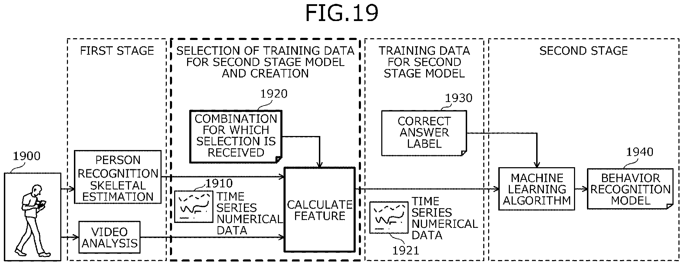

Next, with reference to Fig. 19, an example of the information processing device 100 training a behavior recognition model 1940 for recognizing specific behaviors is described. A specific behavior, for example, is "smartphone use while walking" or "take product from shelf", etc. In the example depicted in Fig. 19, an instance is described in which the specific behavior is, more specifically, "smartphone use while walking".

Fig. 19 is a diagram depicting an example of training of the behavior recognition model 1940. In Fig. 19, the information processing device 100 has a trained DL model. The DL model, for example, has a function of calculating coordinate positions of body parts of a person captured in an input video. The DL model, for example, has a function of detecting an object captured in the input video.

(19-1) The information processing device 100 obtains a training video 1900. The information processing device 100 inputs the training video 1900 to the trained DL model and thereby, performs person recognition and skeletal estimation. The person recognition, for example, is a process for recognizing a person captured in the training video 1900. The skeletal estimation, for example, is a process for calculating coordinate positions of each of multiple body parts of a person captured in the training video 1900.

The information processing device 100, based on a result of performing the person recognition and the skeletal estimation, recognizes a person captured in frames of the training video 1900 and obtains the coordinate positions of each body part of the person, in each of the frames. The information processing device 100, based on the coordinate position of any of the body parts, analyzes the video and generates an image feature vector. The information processing device 100 stores time series numerical data 1910 in which the coordinate positions of body parts and the image feature vectors are arranged in time series.

(19-2) The information processing device 100, based on the stored time series numerical data 1910, calculates time series numerical data 1921 of the features of the types in a received selected combination 1920 that corresponds to the specific behavior "smartphone use while walking". The information processing device 100, according to a machine learning algorithm, generates training data in which a correct answer label 1930 is associated with the calculated time series numerical data 1921. The information processing device 100 trains the behavior recognition model 1940 based on the training data.

As a result, the information processing device 100 may reduce the processing load and process time for training the behavior recognition model 1940 capable of accurately recognizing a specific behavior and may enable use of the behavior recognition model 1940.

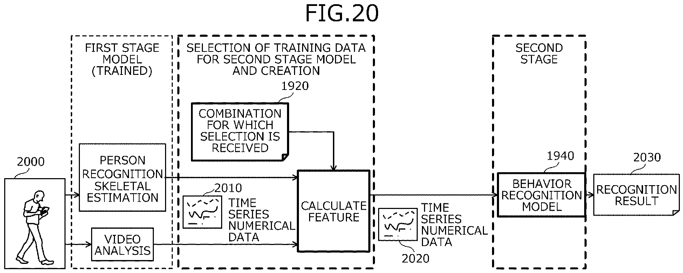

Next, with reference to Fig. 20, an example of in which the information processing device 100 uses the trained the behavior recognition model 1940 to thereby recognize a behavior of a person captured in an inference-use video 2000 is described.

Fig. 20 is a diagram depicting an example of use of the behavior recognition model 1940. In Fig. 20, the information processing device 100 has a trained DL model. The DL model, for example, has a function of calculating coordinate positions of body parts of a person captured in an input video. The DL model, for example, has a function of detecting an object captured in the input video.

(20-1) The information processing device 100 obtains the inference-use video 2000. The information processing device 100 inputs the inference-use video 2000 to the trained DL model and thereby, performs person recognition and skeletal estimation. The person recognition, for example, is a process for recognizing a person captured in the inference-use video 2000. The skeletal estimation, for example, is a process for calculating coordinate positions of each of multiple body parts of a person captured in the inference-use video 2000.

The information processing device 100, based on a result of performing the person recognition and the skeletal estimation, recognizes a person captured in frames of the inference-use video 2000 and obtains the coordinate positions of each body part of the person, in each of the frames. The information processing device 100, based on the coordinate position of any of the body parts, analyzes the video and generates an image feature vector. The information processing device 100 stores time series numerical data 2010 in which the coordinate position of body part and the image feature vectors are arranged in time series.

(20-2) The information processing device 100, based on the stored time series numerical data 2010, calculates time series numerical data 2020 of the features of the types in the received selected combination 1920 that corresponds to the specific behavior "smartphone use while walking". The information processing device 100 inputs the calculated time series numerical data 2020 to the behavior recognition model 1940 and thereby, recognizes a behavior of a person captured in the inference-use video 2000. The information processing device 100, for example, determines whether a behavior of a person captured in the inference-use video 2000 is a specific behavior. The information processing device 100 outputs a result 2030 of recognizing the person captured in the inference-use video 2000. As a result, the information processing device 100 may accurately recognize a specific behavior.

### (Procedure of process performed during training)

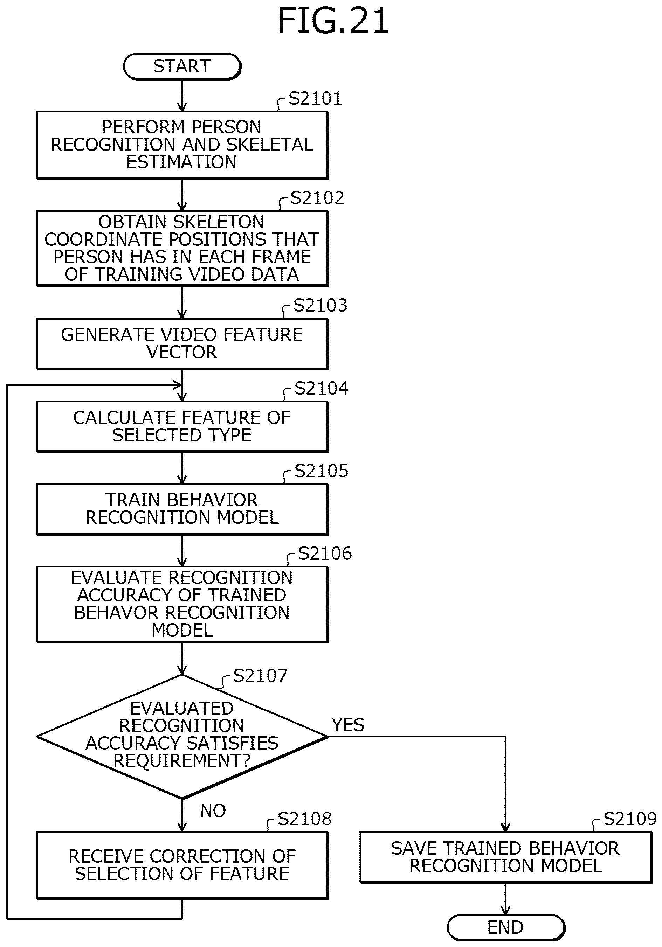

Next, with reference to Fig. 21, an example of a procedure of a process executed by the information processing device 100 during training is described. The process performed during training, for example, is implemented by the CPU 301, a storage region such as the memory 302 and the recording medium 305, and the network I/F 303 depicted in Fig. 3.

Fig. 21 is a flowchart depicting an example of the procedure of the process performed during training. In Fig. 21, the information processing device 100 performs person recognition and skeletal estimation, using a trained DL model, based on training video data (step S2101).

Next, the information processing device 100, based on a result of performing the person recognition and the skeletal estimation, obtains skeletal coordinate positions of a person, in each frame of the training video data (step S2102). Subsequently, the information processing device 100, based on the skeletal coordinate positions, performs video analysis and generates a video feature vector (step S2103).

Next, the information processing device 100, based on the skeletal coordinate positions and the image feature vectors, calculates the features of the selected types (step S2104). Subsequently, the information processing device 100, according to a machine learning algorithm, trains the behavior recognition model, based on the calculated features (step S2105).

Next, the information processing device 100 evaluates recognition accuracy of the trained behavior recognition model, based on evaluation-use video data (step S2106). Subsequently, the information processing device 100 determines whether the evaluated recognition accuracy satisfies a requirement (step S2107).

Here, when the recognition accuracy satisfies the requirement (step S2107: YES), the information processing device 100 transitions to the process at step S2109. On the other hand, when the recognition accuracy does not satisfy the requirement (step S2107: NO), the information processing device 100 transitions to the process at step S2108.

At step S2108, the information processing device 100 receives correction of the selected features, based on an operation input by the user (step S2108). Subsequently, the information processing device 100 returns to the process at step S2104.

At step S2109, the information processing device 100 saves the trained behavior recognition model (step S2109). Subsequently, the information processing device 100 ends the process performed during training.

### (Procedure of process performed during inferencing)

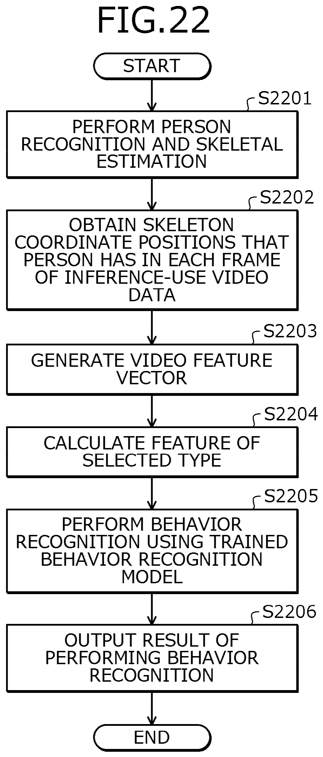

Next, with reference to Fig. 22, an example of a procedure of a process executed by the information processing device 100 during inferencing is described. The process performed during inferencing, for example, is implemented by the CPU 301, a storage region such as the memory 302 and the recording medium 305, and the network I/F 303 depicted in Fig. 3.

Fig. 22 is a flowchart depicting an example of the procedure of the process performed during inferencing. In Fig. 22, the information processing device 100 performs person recognition and skeletal estimation, using a trained DL model based on inference-use video data (step S2201).

Next, the information processing device 100, based on a result of performing the person recognition and the skeletal estimation, obtains skeletal coordinate positions of a person, in each frame of the inference-use video data (step S2202). Subsequently, the information processing device 100, based on the skeletal coordinate positions, performs video analysis and generates an image feature vector (step S2203).

Next, the information processing device 100, based on the skeletal coordinate positions and the image feature vectors, calculates the features of the selected types (step S2204). Subsequently, the information processing device 100, performs behavior recognition using the calculated features and the trained behavior recognition model (step S2205).

Next, the information processing device 100 outputs a result of performing behavior recognition (step S2206). Subsequently, the information processing device 100 ends the process performed during inferencing.

### (Procedure of overall processing performed during training)

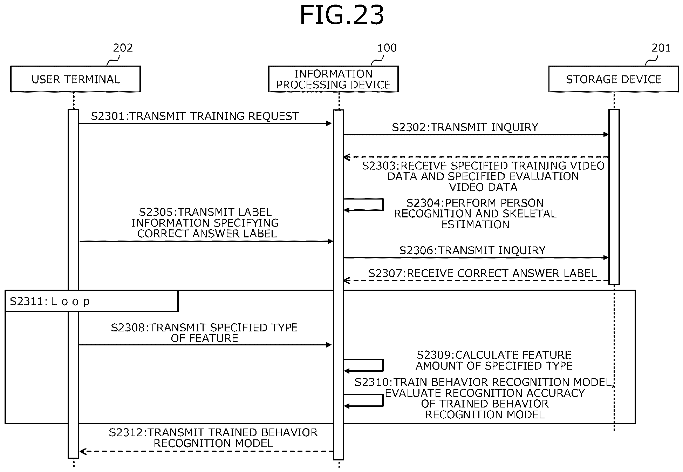

Next, with reference to Fig. 23, an example of a procedure of overall processing executed by the behavior recognition system 200 during training is described.

Fig. 23 is a sequence diagram depicting an example of a procedure of overall processing executed during training. In Fig. 23, the user terminal 202, based on an operation input by the user, transmits a training request specifying the training video data and the evaluation-use video data to the information processing device 100 (step S2301).

The information processing device 100, based on the received training request, transmits an inquiry for the specified training video data and the specified evaluation-use video data to the storage device 201 (step S2302). The information processing device 100 receives the specified training video data and the specified evaluation-use video data from the storage device 201 (step S2303). The information processing device 100 performs person recognition and skeletal estimation, using the trained DL model based on the training video data and obtains skeletal coordinate positions of a person, in each frame of the training video data, and a video feature of the training video data (step S2304).

The user terminal 202, based on an operation input by the user, transmits label information specifying a correct answer label to the information processing device 100 (step S2305).

The information processing device 100, based on the received label information, transmits an inquiry for the correct answer label to the storage device 201 (step S2306). The information processing device 100 receives a correct answer label from the storage device 201 (step S2307).

The user terminal 202, based on an operation input by the user, receives specification of a type of feature and transmits the specified type of feature to the information processing device 100 (step S2308).

The information processing device 100 stores the received specified type of feature to a file and based on the training video data, calculates the feature of the specified type (step S2309). The information processing device 100 trains the behavior recognition model, based on the calculated features and evaluates recognition accuracy of the trained behavior recognition model, based on the evaluation-use video data (step S2310).

The information processing device 100 repeatedly performs the processes at steps S2308 to S2310 until the recognition accuracy is equal to or greater than a reference value (step S2311). The information processing device 100 transmits the trained behavior recognition model to the user terminal 202 (step S2312). The behavior recognition system 200 ends the overall processing performed during training.

### (Procedure of overall processing performed during inferencing)

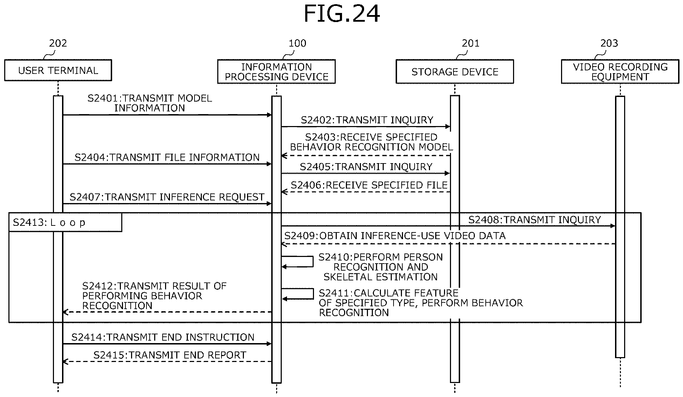

Next, with reference to Fig. 24, an example of a procedure of overall processing executed by the behavior recognition system 200 during inferencing is described.

Fig. 24 is a sequence diagram depicting an example of a procedure of the overall processing performed during inferencing. In Fig. 24, the user terminal 202, based on an operation input by the user, transmits model information specifying a behavior recognition model to the information processing device 100 (step S2401).

The information processing device 100, based on the received model information, transmits an inquiry for the specified behavior recognition model to the storage device 201 (step S2402). The information processing device 100 receives the specified behavior recognition model from the storage device 201 (step S2403).

The user terminal 202, based on an operation input by the user, transmits file information specifying the file storing the type of feature to the information processing device 100 (step S2404).

The information processing device 100, based on the received file information, transmits an inquiry for the specified file to the storage device 201 (step S2405). The information processing device 100 receives the specified file from the storage device 201 (step S2406).

The user terminal 202, based on an operation input by the user, transmits an inference request to the information processing device 100 (step S2407).

The information processing device 100 transmits an inquiry for the inference-use video data to the video equipment 203 (step S2408). The information processing device 100 obtains the inference-use video data from the video equipment 203 (step S2409). The information processing device 100 performs person recognition and skeletal estimation, using the trained **DL** model based on the inference-use video data and obtains skeletal coordinate positions of a person, in each frame of the inference-use video data, and obtains a video feature of the inference-use video data (step S2410)

The information processing device 100 refers to the file and based on the skeletal coordinate positions and video features of the inference-use video data, calculates the feature of the specified type and based on the calculated features, performs behavior recognition, using the specified behavior recognition model (step S2411). The information processing device 100 transmits a result of performing the behavior recognition, to the user terminal 202, (step S2412).

The information processing device 100 repeatedly performs the processes at steps S2408 to S2412 until receiving an end instruction (step S2413).

The user terminal 202, based on an operation input by the user, transmits an end instruction to the information processing device 100 (step S2414).

The information processing device 100, when receiving the end instruction, stops repeatedly performing the processes at steps S2408 to S2412 and transmits an end report to the user terminal 202 (step S2415). The behavior recognition system 200 ends the overall processing performed during inferencing.

As described, according to the information processing device 100, among multiple types that classify features related to behaviors of a person, specification of a combination of types belonging to each of one or more aspects that define a specific behavior may be received. According to the information processing device 100, among the multiple features calculable based on the first video and related to a behavior of the first person captured in the first video, the features of the types in the specified combination may be obtained. According to the information processing device 100, based on the obtained features, a model for recognizing a specific behavior of a person captured in a video may be trained. As a result, the information processing device 100 may easily train a model capable of accurately recognizing a specific behavior of a person.

According to the information processing device 100, among the multiple types, specification of a combination of types belonging to each of one or more aspects that define each of multiple elements forming a specific behavior may be received. As a result, the information processing device 100 may receive specification of a combination that suitably represents a specific behavior.

According to the information processing device 100, the multiple features related to a behavior of the first person captured in the first video may be calculated by analyzing the first video. According to the information processing device 100, among the calculated multiple features, the features of the types in a specified combination may extracted to thereby be obtained. As a result, the information processing device 100 itself may calculate the features of the types in a specified combination.

According to the information processing device 100, one or more types classifying features belonging to the spatial first aspect may be included among the multiple types. According to the information processing device 100, one or more types classifying features belonging to the temporal second aspect may be included among the multiple types. According to the information processing device 100, one or more types classifying features belonging to the third aspect concerning a relationship between a person and another object or a location may be included among the multiple types. According to the information processing device 100, one or more types classifying features belonging to the fourth aspect concerning interaction between features may be included among the multiple features. As a result, the information processing device 100 may enable use of two or more features belonging to different aspects.

According to the information processing device 100, the coordinates of each of one or more parts of the first person captured in the first video may be calculated by analyzing the first video and based on the calculated coordinates, one or more features belonging to the first aspect may be calculated. As a result, the information processing device 100 may enable use of one or more features belonging to the first aspect.

According to the information processing device 100, by analyzing the first video, the coordinates of each of one or more parts of the first person captured in the first video may be calculated and based on the calculated coordinates, one or more features belonging to the second aspect may be calculated. As a result, the information processing device 100 may enable use of one or more features belonging to the second aspect.

According to the information processing device 100, by analyzing the first video, the coordinates of each of one or more parts of the first person captured in the first video may be calculated and another object or location captured in the first video may be detected. According to the information processing device 100, based on the calculated coordinates and another detected object or location, one or more features belonging to the third aspect may be detected. As a result, the information processing device 100 may enable use of one or more features belonging to the third aspect.

According to the information processing device 100 may calculate one or more features belonging to the fourth aspect, based on the calculated features. As a result, the information processing device 100 may enable one or more features belonging to the fourth aspect.

According to the information processing device 100, the first video may be input to the first model and thereby, the coordinates of each of one or more parts of the first person captured in the first video may be calculated. As a result, the information processing device 100 may accurately calculate the coordinates of each of one or more parts of the first person captured in the first video.

According to the information processing device 100, the first video may be input to the second model and thereby, in addition to the first person, another object or location captured in the first video may be detected. As a result, the information processing device 100 may detect in addition to the first person, another object or location captured in the first video.

According to the information processing device 100, a model may be trained based on training data associating obtained features and a correct answer of whether a behavior of the first person captured in the first video is a specific behavior. As a result, the information processing device 100 may train a model having a function of recognizing a specific behavior of a person captured in a video, in response to input of the features of the types in a specified combination.

According to the information processing device 100, the first model may be trained based on the first training data associating a sample video and the coordinates of each of one or more parts of a person captured in the sample video. As a result, the information processing device 100 may independently obtain the first model.

According to the information processing device 100, the second model may be trained based on the second training data associating the sample video and a correct result of detecting a person or an object captured in the sample video. As a result, the information processing device 100 may independently obtain the second model.

According to the information processing device 100, among the multiple features calculable based on the second video and related to a behavior of the second person captured in the second video, features of the types in the specified combination may be obtained. According to the information processing device 100, the obtained features may be input to the trained model and thereby, whether a behavior of the second person is a specific behavior may be determined. As a result, the information processing device 100 may accurately recognize a behavior of the second person.

The information processing method described in the present embodiments may be implemented by executing a prepared program on a computer such as a PC or workstation. The information processing program described in the present embodiments is stored to a computer-readable recording medium and is executed by being readout from the recording medium by the computer. The recording medium is a hard disk, a flexible disk, a compact disk (CD)-ROM, a magneto optical disc (MO), a digital versatile disc (DVD), etc. Further, the information processing program described in the present embodiments may be distributed through a network such as the Internet.

### EXPLANATIONS OF LETTERS OR NUMERALS

100 information processing device
101 video
110 type
121 feature
130 model
200 behavior recognition system
201 storage device
202 user terminal
203 video recording equipment
210 network
300, 400, 500, 600 bus
301, 501, 601 CPU
302, 402, 502, 602 memory
303, 503, 603 network I/F
304, 504, 604 recording medium I/F
305, 505, 605 recording medium
401 central controller
403 client I/F
404 device I/F
405 storage apparatus
606 video recording apparatus
700 storage unit
701 obtaining unit
702 calculating unit
703 training unit
704 inferencing unit
705 output unit
800, 900, 1000, 1100, 1200, 1300, 1400 table
1500, 1600 input screen
1900 training video
1910, 1921, 2010, 2020 time series numerical data
1930 correct answer label
1940 behavior recognition model
1940 the behavior recognition model
2000 inference-use video
2030 result

## Claims

1. An information processing program for causing a computer to execute a process, the process comprising:
receiving specification of a combination of one or more types defining a specific behavior, among a plurality of types each classifying a feature related to a behavior of a person;
obtaining, among a plurality of features related to a behavior of a first person captured in a first video, a feature of each type in the specified combination; and
training a model that recognizes the specific behavior of the person captured in a video, the model being trained based on each obtained feature.

2. The information processing program according to claim 1, wherein
the receiving includes receiving the specification of the combination of types that are among the plurality of types and belong to each of one or more aspects that define the specific behavior.

3. The information processing program according to claim 2, wherein
the receiving includes receiving the specification of the combination of types that, among the plurality of types, belong to each of one or more aspects that define each of a plurality of elements forming the specific behavior.

4. The information processing program according to claim 2 or 3, the process further comprising
analyzing the first video and thereby, calculating the plurality of features related to the behavior of the first person captured in the first video, wherein
the obtaining includes obtaining, among the calculated plurality of features, the feature of the each type in the specified combination.

5. The information processing program according to claim 4, wherein
the plurality of types includes any two or more types among: one or more types classifying features belonging to a spatial first aspect, one or more types classifying features belonging to a temporal second aspect, one or more types classifying features belonging to a third aspect concerning a relationship between the person and another object or a location, and one or more types classifying features belonging to a fourth aspect concerning interaction between the features.

6. The information processing program according to claim 5, wherein
the calculating includes analyzing the first video and thereby, calculating coordinates of each of one or more parts of the first person captured in the first video, and based on the calculated coordinates, calculating the one or more features belonging to the spatial first aspect.

7. The information processing program according to claim 6, wherein
the calculating includes analyzing the first video and thereby, calculating the coordinates of the each of one or more parts of the first person captured in the first video, and based on the calculated coordinates, calculating the one or more features belonging to the temporal second aspect.

8. The information processing program according to claim 7, wherein
the calculating includes analyzing the first video and thereby, calculating the coordinates of the each of one or more parts of the first person captured in the first video, detecting another person or object captured in the first video, and calculating the one or more features belonging to the third aspect, based on the calculated coordinates and the detected another person or object.

9. The information processing program according to claim 8, wherein
the calculating includes calculating, based on the calculated plurality of features, the one or more features belonging to the fourth aspect.

10. The information processing program according to claim 9, wherein the calculating includes inputting the first video to a first model that outputs coordinates of each of one or more parts of a person captured in a video input to the first model, and thereby calculating the coordinates of the each of one or more parts of the first person captured in the first video.

11. The information processing program according to claim 10, wherein the calculating includes inputting the first video to a second model that detects an object or location captured in a video input to the second model, and thereby detecting in addition to the first person, another object or location captured in the first video.

12. The information processing program according to claim 1, wherein
the model has a function of recognizing the specific behavior of the person captured in a video, in response to input of the feature of the each type in the specified combination, and
the training includes training the model, based on training data associating the each obtained feature and a correct answer of whether the behavior of the first person captured in the first video is the specific behavior.

13. The information processing program according to claim 11, the process further comprising training the first model, based on first training data associating a sample video and correct coordinates of the each of one or more parts of a person captured in the sample video.

14. The information processing program according to claim 13, the process further comprising
training the second model, based on second training data associating the sample video and a correct result of detecting the object or location captured in the sample video.

15. The information processing program according to claim 1, the process further comprising
inputting, among a plurality of features related to a behavior of a second person captured in a second video, a feature of the each type in the specified combination, to the trained model and thereby determining whether the behavior of the second person is the specific behavior.

16. The information processing program according to claim 1, wherein the features related to the behavior of the first person are calculated based on skeletal information of the first person, included in the first video.

17. An information processing device, comprising a controller configured to:
receive specification of a combination of one or more types defining a specific behavior, among a plurality of types each classifying a feature related to a behavior of a person;
obtain, among a plurality of features related to a behavior of a first person captured in a first video, a feature of each type in the specified combination; and
train a model that recognizes the specific behavior of the person captured in a video, the model being trained based on each obtained feature.

18. An information processing program for causing a computer to execute a process, the process comprising:
obtaining, based on a specification of a combination of one or more types defining a specific behavior, a feature of each type in the combination, among a plurality of features related to a behavior of a first person captured in a first video, the one or more types being among a plurality of types each classifying a feature related to a behavior of a person; and
using each obtained feature and a machine learning model that recognizes the specific behavior of the person captured in a video, and thereby recognizing the behavior of the first person captured in the first video.

19. An information processing device, comprising a controller configured to:
obtain, based on a specification of a combination of one or more types defining a specific behavior, a feature of each type in the combination, among a plurality of features related to a behavior of a first person captured in a first video, the one or more types being among a plurality of types each classifying a feature related to a behavior of a person; and
use each obtained feature and a machine learning model that recognizes the specific behavior of the person captured in a video, and thereby recognize the behavior of the first person captured in the first video.
